Europäisches Patentamt

European Patent Office

Office européen des brevets

(19)

(11) **EP 0 479 268 B1**

(12) **EUROPÄISCHE PATENTSCHRIFT**

(45) Veröffentlichungstag und Bekanntmachung des Hinweises auf die Patenterteilung:
**04.12.1996  Patentblatt 1996/49**

(51) Int Cl.[6]: **H04L 7/04**

(21) Anmeldenummer: **91116819.3**

(22) Anmeldetag: **02.10.1991**

(54) **Schaltungsanordnung und Verfahren zur getakteten Korrelations- und Signalverarbeitung mittels strukturprogrammierbarem Prozessor**

Apparatus and method for clocked correlation and signal processing using a structure-programmable processor

Appareil et méthode pour corrélation synchronisée et traitement de signal utilisant un calculateur ayant une programmation structurée

(84) Benannte Vertragsstaaten:
**CH DE ES FR GB IT LI SE**

(30) Priorität: **02.10.1990  DE 4031124
04.12.1990  DE 4038561**

(43) Veröffentlichungstag der Anmeldung:
**08.04.1992  Patentblatt 1992/15**

(73) Patentinhaber: **F & O Electronic Systems GmbH
D-69239 Neckarsteinach (DE)**

(72) Erfinder:
• **Wedler, Volker
O-8060 Dresden (DE)**
• **Hönig, Jörg
O-8080 Dresden (DE)**
• **Wenert, Lutz
O-8020 Dresden (DE)**
• **Ihlefeld, Joachim Dr
O-8060 Dresden (DE)**

(74) Vertreter: **Mierswa, Klaus, Dipl.-Ing.
Friedrichstrasse 171
68199 Mannheim (DE)**

(56) Entgegenhaltungen:
**WO-A-82/03516          DE-A- 2 217 392
DE-A- 3 500 363**

• **PATENT ABSTRACTS OF JAPAN vol. 9, no. 321 (E-367)(2044) 17. Dezember 1985 & JP-A-60 153 245**

**Beschreibung**

Technisches Gebiet:

Die Erfindung betrifft ein Verfahren zur getakteten Korrelations- und Signalverarbeitung mittels strukturprogrammierbarem Prozessor zum Synchronisieren von drathlosen Empfängern in von Sendern ausgestrahlten digitalen Rahmennetzen, Mobilfunknetzen und gleichwertigen Einrichtungen, die im Zeitmultiplexverfahren arbeiten und eine Schaltungsanordnung zur Durchführung des Verfahrens.

Stand der Technik:

Zum Synchronisieren von Empfängern in von Sendern ausgestrahlten digitalen Rahmennetzen, Mobilfunknetzen und gleichwertigen Einrichtungen, die im Zeitmultiplexverfahren arbeiten, werden zur getakteten Korrelations- und Signalverarbeitung Verfahren und Schaltanordnungen eingesetzt, die eine Synchronisation entweder auf digitale oder analoge Weise realisieren. Bei digitalen Korrelations-verfahren wird das empfangene Signal mit einem digitalen Muster verglichen und bei Übereinstimmung ein Korrelationssignal gebildet. Das Korrelationssignal kann bei bestimmten Modulationsarten, z.B. PSK oder QAM, komplex sein. Wenn der Betrag des Korrelationssignals größer als eine vorgegebene Schwelle ist, wird in Echtzeit ein digitales Signal abgeleitet, dessen zeitliche Länge ausgewertet wird. Die zeitliche Mitte dieses Impulses gibt mit der Genauigkeit einer systemspezifischen Konstanten die optimale Lage des Bitabtastwertes an und kann zur Synchronisation eines Bittaktergenerators genutzt werden.

Die bekannten technischen Lösungen unterscheiden sich im wesentlichen durch den Anschluß zur Digitalisierung der analogen Eingangsinformationen sowie die Art und Weise der Ableitung des Bittaktes. Allgemein wird ein paralleler Vergleich von verzögerten Abtastwerten mit einem Synchronwort vorgenommen.

Aus der DE-AS -3 032 296 und ähnlich auch aus der DE-PS -3 131 406 und der GB-PS-2 160 391 sind Schaltungsanordnungen zur Synchronisation von Sende/ Empfangsgeräten auf ein Nachrichtennetz bekannt. Die DE-AS-3 032 296 beschreibt hierbei einen Korrelationsempfänger mit Laufzeitgliedern. Die Phasenfindung erfolgt durch umschaltbare Vor/Rückwärtszähler, wobei die Phase zwischengespeichert und an einen Rechner weitergegeben wird. Nach der DE-PS 3131406 erfolgt eine Offsetkorrektur des ankommenden Analogsignals für das Empfangsteil des Basisbandes der Sende/Empfangsstelle durch Korrelation auf das Synchronwort und Messung des Offsets des Synchronwortes (Barkercode) mit anschließender Korrektur über einen Rechner. Ähnlich verfährt ebenfalls die GB 2160391, wobei die Abtastung eines Bitsynchronimpulses durch einen Rechner mit gesteuertem Signalregister erfolgt, zur Ermittlung der Bitmitte.

Nachteilig ist bei diesen Lösungen, daß bei Verwendung langer Synchronworte, zur Realisierung einer höheren Störsicherheit, jedoch ein größerer Aufwand für analoge Verzögerungsglieder bzw. größere FIFO-Speicher betrieben werden muß und eine Integration erschwert wird.

Aus der DE-OS-3 403 716, der WO-A-8 203 516, der DE-OS-3 507 029 und der DE-OS-3 527 330 sind Funkübertragungssystem für Mobilfunk bekannt, insbesondere digitale Zellenfunksysteme mit Zeitmultiplex. Die DE-OS-3 507 029 beschreibt hierbei ein Verfahren zum Normieren von Signalkanälen auf einen TDMA-Rahmen in Mobilfunksystemen. Jeder Signalkanal beginnt mit einem Synchronwort, welches durch Abtastung ermittelt wird. Dazu wird jedes Bit des Eingangssignals in eine Anzahl von Intervallen zerlegt, abgetastet und in nachfolgenden Schieberegistern abgespeichert. Anzapfungen dieser Schieberegister werden mit einem abgespeicherten Synchronwort parallel verglichen. Schließlich ist nach der DE-OS-3 426 561 eine Lösung bekannt, nach der die Korrelation auf das Synchronwort durch Untertaktschritte und Bildung der Mitte des Korrelationsimpulses erfolgt. Die Korrelation wird in einem Synchronschieberegister mit Vergleich auf ein in einem Synchronwortgatter abgelegtes Synchronwort gebildet.

Nachteilig ist auch bei diesen Lösungen, daß bei der Synchronisation auf lange Synchronworte der Aufwand stark erhöht wird. Weiterhin ist die Nutzung von Aprioriinformationen zur Lage des Synchronwortes an eine zeitlich vorgeschaltete Analyse des Eingangssignals gebunden, die das Einschwingverhalten, insbesondere bei dispersiven Funknetzen, deutlich verlängert und die Synchronisationsstatistik negativ beeinflußt. Alle genannten Verfahren bzw. Vorrichtungen weisen daneben die Nachteile auf, daß bei der Synchronisation auf lange Synchronworte, die ihrer höheren Störsicherheit wegen vorteilhaft sind, der Aufwand für analoge Verzögerungsglieder bzw. große FIFO-Speicher die Integration in kostengünstigen kundenspezifischen Schaltkreisen erschwert.

Technische Aufgabe:

Der Erfindung liegt die Aufgabe zugrunde, die Empfangsqualität von modulierten Datensignalen innerhab von getakteten Korrelations- und Signalverarbeitungseinheiten zum Synchronisieren von Empfängern in digitalen Rahmennetzen, Mobilfunknetzen und gleichwertigen Einrichtungen zu verbessern und eine Schaltungsanordnung vorzuschlagen, die sich durch eine gute Integrationsfähigkeit auszeichnet. Des weiteren liegt der Erfindung die Aufgabe zugrunde, zur Korrelation und Signalverarbeitung die Kreuzkorrelation des empfangenen Signales mit einem oder mehreren bekannten, der Synchronisation dienenden Bitmustern in Echtzeit zu berechnen und daraus den Bit- und Worttakt abzuleiten und eine blockweise Permutation der empfangenen Informaitonsdaten sowie deren Ausgabe über einen DMA-Kanal zu realisieren.

Darstellung der Erfindung und deren Vorteile:

Die Aufgabe wird erfindungsgemäß gelöst durch ein Verfahren zur getakteten Korrelations- und Signalverarbeitung mittels strukturprogrammierbaren Prozessor für drahtlose Empfänger in von Sendern ausgestrahlten digitalen Rahmennetzen, Mobilfunknetzen und gleichwertigen Einrichtungen, die im Zeitmultiplexverfahren arbeiten zum Synchronisieren der Empfänger auf ein Bitmuster mit variablem, zeitdiskretem Bitabstand in Nachrichtenkanälen, gemäß der Merkmale:

a) die Signalfolge des Senders mit bekanntem Takt aber unbekannter Phase wird mit einem schnelleren Takt, vorzugsweise ganzzahligen Faktor 7-20, abgetastet,

b) b) die Abtastwerte werden binarisiert und abgespeichert

c) die abgespeicherten Werte werden, beginnend vom aktuellen Abtastwert, einem Korrelator zugeführt, wobei pro Bit der Signalfolge des Senders ein Abtastwert verwendet wird und diese Abtastwerte in einem zeitlichen Abstand von einem Bittakt aufgezeichnet und die Resultate der Korrelation mit einem vorbekannten Synchronisationswert als Folge von Korrelationswerten dargestellt werden, wobei jedem Abtastwert ein derartiger Korrelationswert zugeordnet ist

d) eine gesuchte Signalfolge gilt als festgestellt, wenn eine Mindestanzahl zusammenhängender korrelierter Werte auftritt,

e) die Folge von Korrelationswerten wird mit dem Abtasttakt über die Länge eines Bittaktes verzögert, wobei dann daraus ein Korrelationsimpuls gebildet wird, wenn die Anzahl der verzögerten Korrelationswerte größer als die halbe Periode des Bittaktes oder gleich der Anzahl der verzögerten Korrelationswerte mit einer Verzögerung kleiner als die halbe Periode des Bittaktes ist

f) der Korrelationsimpuls stellt die Phase des Bittaktes für die nachfolgend gesuchten Daten ein

g) die der Synchronfolge folgende Bitfolge wird in einem Speicher als Matrix zeilenweise abgespeichert und spaltenweise wieder ausgelesen (blockweise Permutation)

h) mit jedem neuen Abtastwert wird der Zyklus wiederholt.

Der entscheidende Vorteil der Erfindung liegt darin, daß bei weit kleineren SignalRauschverhältnissen als beim Stand der Technik noch das Nutzsignal gefunden und erkannt wird. Ein weiterer Vorteil der Erfindung liegt darin, daß ein Maß für die Güte des empfangenen Nutzsignals des Empfängers ermittelt und an den Sender gefunkt wird, der im Verbund mit weiteren Relaisstationen, beispielsweise in einer Wabe, entscheidet, welche Station die Übertragung des Nutzsignals übernimmt. Und zwar übernimmt diejenige Relaisstation die Ausstrahlung des Nutzsignals, die die beste Güte des Nutzsignals beim Empfänger feststellt. Diese Weitergabe der Datenübertragung von einem Sender innerhalb einer Wabe zu einem anderen geschieht in vorteilhafter Weise zu einem Zeitpunkt, bevor die Übertragung des Nutzsignals vom "schlechtesten" Sender zum Empfänger zusammengebrochen ist.

Mit der erfindungsgemäßen Lösung wird in vorteilhafter Weise zum Synchronisieren von drahtlosen Empfängem in von Sendern ausgestrahlten digitalen Rahmennetzen, Mobilfunknetzen und gleichwertigen Einrichtungen ein Verfahren und eine Schaltungsanordnung für eine getaktete Korrelations- und Signalverarbeitungseinheit angegeben, die in der Nachrichtentechnik zum Empfang von modulierten Datensignalen eingesetzt wird. Die Empfangsqualität dieser Datensignale wird dabei durch die eindeutige Erkennung von Sendemode und Signallage wesentlich verbessert, was wiederum die Voraussetzung für eine anschließende zuverlässige Auswertung der Daten im entsprechenden Band bildet. Hinzu kommt, daß sich die Schaltungsanordnung durch eine gute Integrationsfähigkeit auszeichnet und in einem kostengünstigen kundenspezifischen Schaltkreis realisiert werden konnte. Dies wiederum führt zur Einsparung einer Vielzahl von Bauelementen und damit der Realisierung kleiner Geräteabmessungen, der Reduzierung des Fertigungs- und Prüfaufwandes, sowie der Erhöhung des Gebrauchswertes des Erzeugnisses durch hohe Zuverlässigkeit, geringem Stromverbrauch und kleinem Bauvolumen.

Die Mitte des Bereichs der Abtastwerte mit hoher Korrelation stellt in vorteilhafter Weise die Bitmitte dar und wird für die folgenden Abtastungen als Abtastzeitpunkt (Bittakt) genutzt, wobei der Bit-Mittentakt eine zweite Zeitbasis liefert. Mit diesem Aufsuchen der Mitte des Bereiches der Abtastwerte mit hoher Korrelation zum Bestimmen der Bitmitte ist der Vorteil verbunden, daß mit hoher Wahrscheinlichkeit dort gemessen wird, wo die geringste Fehlerwahrscheinlichkeit gegeben bzw. wo der Signalpegel voll vorhanden ist.

In vorteilhafter weiterer Ausgestaltung führt der strukturprogrammierbare Prozessor folgende Schritte in geordneter Reihenfolge im Systemtakt (SCLK) aus:

a) Übernahme des Standes des Bitzählers als Basisadresse in den Adreßrechner (mit dem Signal COPY), Übernahme des Korrelationsergebnisses vom Korrelator in ein Transversalfilter und anschließende Initialisierung des Korrelators (durch das Signal INIT),

b) Schreiben (WE) des aktuellen Abtastwertes in ein RAM auf die durch Phasenzähler und Bitzähler bestimmte Adresse,

c) Lesen des RAM auf der Adresse, die dem differentiellen Bitabstand des ersten signifikanten Bits zur Basisadresse im Bitzähler entspricht und anschließende Ausgabe des ersten Bits des Referenzmusters (BITMUSTER) vom Befehlsdekoder sowie Freigabe des Korrelators (mit dem Signal SCTRL),

d) Wiederholung des vorangegangenen Schrittes mit dem nächsten differentiellen Bitabstand und dem nächsten Bit des Referenzmusters, wobei die Adresse, die dem differentiellen Bitabstand entspricht, im Adreßrechner durch Addition zur Basisadresse gewonnen wurde.

Zur Formatierung einer Matrix aus einem seriellen Datenstrom, dessen Bits spaltenweise in die Zielmatrix einzutragen sind mit dem synchron zum Bitstrom laufenden zweiten Zähler in der zweiten Zeitbasis, wird die Wortadresse im RAM und die Bitadresse des abzuspeichernden Datenbits im Datenwort ermittelt, wobei bei der Dateneinspeicherung ein komplettes Datenwort bzw. Teil desselben aus dem RAM in ein bitweise manipulierbares Register der Datensteuerung geladen wird und das einzuspeichernde Bit seiner Position gemäß mit Bittakt in das Register eingespeichert wird und danach das gesamte Datenwort bzw. Teil desselben in den RAM auf die unveränderte Wortadresse zurückgeschrieben wird.

Die Prozesse des formatierten Dateneinschreibens und des Datenauslesens (DMA-Zugriff) laufen asynchron zueinander in zwei verschiedenen Speicherbereichen innerhalb des physisch nicht belegten Adreßraums des RAM ab, wobei nach dem Blockende beim Dateneinschreiben der Speicherbereich umgeschaltet und das Umschalten sofort durchgeführt wird, wenn aufden anderen Speicherbereich kein DMA-Zugriff erfolgt und das Umschalten bis zum Abschluß des DMA-Zugriffs verzögert wird, falls ein solcher zu diesem Zeitpunkt stattfindet, daß der DMA-Zugriff synchron zu einer externen Zeitbasis mit wesentlich höherer Datenrate als das Einschreiben erfolgt.

Eine erfindungsgemäße Schaltungsanordnung ist dadurch gekennzeichnet, daß einem Befehlszähler ein Befehlsdekoder und über einen Phasenzähler ein Bitzähler nachgeordnet sind, die eine erste Zeitbasis bilden, daß dem Befehlszähler eingangsseitig ein Systemtakt (SCLK) und dem Befehlszähler, dem Phasenzähler und dem Bitzähler ein Synchronisationseingang (SYNCI) zum Rücksetzen der ersten Zeitbasis zugeordnet sind, wobei der Befehlsdekoder ausgangsseitig durch ein Steuersignal (COPY) mit einer zweiten Zeitbasis und parallel dazu über einen Adreßrechner mit einer Adreßsteuerung, über einen Initiatorausgang (INIT) mit einem Korrelator und einem Transversalfilter sowie einem Steuerausgang (IWE) mit einer Datensteuerung, einem Ausgang für Bitmuster (BITMUSTER) mit dem Korrelator sowie einer Steuerleitung (DMA) mit einer DMA-Steuerung und parallel dazu der zweiten Zeitbasis verbunden ist, daß der Phasenzähler über einen Datenbus (PHASE) mit der Datensteuerung und dem Bitzähler und der Bitzähler mit dem Adreßrechner verbunden ist, daß dem Korrelator eingangsseitig die Datensteuerung und ausgangsseitig der Transversalfilter und dem Transversalfilter ausgangsseitig ein Datenbus (STATUS) zur Datensteuerung und eine Synchronisationssteuerleitung (SYNCB) zur Zeitbasis zugeordnet ist, daß die Datensteuerung ausgangsseitig über einen bidirektionalen Datenbus (DATEN) mit einem RAM und über einen weiteren Datenbus mit der DMA-Steuerung verbunden ist und eingangsseitig über einen weiteren Datenbus die Abtastwerte erhält, und daß die DMA-Steuerung ausgangsseitig einem DMA-Bus zugeordnet ist, und daß der Ausgang der zweiten Zeitbasis über die Adreßsteuerung mit dem RAM verbunden ist. Die erfindungsgemäße Lösung sieht ein Verfahren zur Korrelations- und Signalverarbeitung mittels strukturprogrammierbaren Prozessors vor, die RISC- oder FORTH- Prozessoren sein können. Die Prozessoren können dabei programmierbar bleiben und in ihrer Struktur in der Anwendung umprogrammiert werden; oder sie können für eine bestimmte Anwendung im voraus strukturprogrammiert sein.

Die folgenden Schritte werden durch den Befehlsdekoder mit dem Systemtakt ausgeführt:
Mit dem Steuersignal COPY des Adreßrechners wird zunächst der Inhalt des Bitzählers in den Adreßrechner kopiert, der digitale Integrator initialisiert und der Korrelator über ein Steuersignal blockiert. Danach wird mit einem Schreibsignal WRKORR der Inhalt der Schieberegister mit den im Intervalltakt (Länge eines Bittaktes dividiert durch den Zählumfang des Phasenzählers) digitalisierten Eingangssignalen, den Abtastwerten, in den RAM geschrieben. Im nächstfolgenden und und weiteren Takten ermittelt der Adreßrechner jeweils die den signifikanten Bits des Bitmusters entsprechenden Bitabstände und es werden auf den so ermittelten Adressen des RAM Abtastwerte gelesen und auf den Eingangsmultiplexer des entsprechenden Korrelators gegeben. Der Ausgang BITMUSTER des Befehlsdekoders liefert dazu zeitgleich das Referenzmuster, welches auch von einer externen Quelle geliefert werden kann. Am Eingang des Korrelators liegen somit in jedem Takt zwei korrespondirende Werte - der im errechneten Bitabstand zum aktuellen Abtastwert von RAM ausgelesene vorher gespeicherte Wert und das entsprechende Bit des Referenzmusters. Der Digitalkomparator prüft die Gleichheit beider Werte, und bei Ungleichheit wird der Digitalintegrator zurückgesetzt, wenn der Vergleich durch ein Steuersignal SCTRL für gültig erklärt wurde. Der Integrator enthält am Ende der Integration den Wert "High" bei vollständiger Identität der Folgen, anderenfalls den Wert "Low". Dieses als Korrelationsimpuls bezeichnete Signal wird mit dem Takt der Initialisierung in das folgende Transversalfilter übernommen. Die Ausführung der Verfahrensschritte laufen innerhalb eines Umlaufs des Befehlszählers, d.h., eines Intervalles (Länge eines Bittaktes dividiert durch den Zählumfang des Phasenzählers) ab.

Für eine mit großer Bandbreite ungestört übertragene rechteckförmige Bitfolge hat bei Übereinstimmung des Codes das Korrelationssignal in allen Intervallen eines Bits High-Pegel, wenn Sende- und Empfangsbittakte in Phase und Frequenz übereinstimmen. Reale Signale sind bandbegrenzt, durch Rauschen gestört und werden mit einem Takt abgetastet, der Frequenz- und Phasenunterschiede zum Sendetakt aufweist, so daß das Korrelationssignal in der Praxis kürzer als eine Bitbreite ist. Ferner treten bei gestörten Signalen auch Störungen der Korrelation auf, so daß in einzelnen Intervallen der Korrelationsimpuls fehlen kann. Das Korrelationssignal besitzt jedoch die Eigenschaft, daß die zeitliche Impulsmitte in guter Näherung mit dem optimalen Abtasttakt zusammenfällt. Die Ableitung des optimalen Abtasttaktes wird im Transversalfilter realisiert.

Zur Herstellung des Zeitbezuges zwischen Sender und Empfänger ist im Empfänger die mit dem Intervalltakt getaktete und mit einem Synchronisationssignal auf den Sender synchronisierte Zähleranordnung der zweiten Zeitbasis angeordnet. Bei der Anwendung verschiedener Synchronisationsarten und somit verschiedener Synchronisationsworte, kann nach Erkennen des Synchronisationswortes die Betriebsart des strukturprogrammierbaren Prozessors und somit der Zählumfang der zweiten Zeitbasis umgeschaltet werden. Diese zweite Zeitbasis wird unter Berücksichtigung der konstanten Laufzeiten der Signale im Transversalfilter mit dem Synchronimpuls SYNCB gesetzt. Am Ausgang des zweiten Phasenzählers steht der Bittakt zur Verfügung.

Die erfindungsgemäße Lösung sieht weiterhin die Permutation von Zeilen und Spalten einer n x m Datenmatrix vor (blockweise Permutation). Diese Anordnung wird über den zweiten Bitzähler sowie einem bitweise adressierbaren Register der Datensteuerung mit typisch 8 bit Länge realisiert. Der zweite Bitzähler ist kaskadiert, eine erste Stufe hat den Zählumfang 2 x m, eine zweite Stufe hat den Zählumfang, der der Länge des bitweise adressierbaren Registers entspricht, typisch 8, eine dritte Stufe hat den Zählumfang int(n/8), wobei int(..) der mathematische Ausdruck für die Bildung einer ganzen Zahl aus dem Ausdruck in der Klammer darstellt. Die erste und dritte Stufe bilden Bestandteile der Adressen für den Datenspeicher, die zweite Stufe adressiert das bitweise adressierbare Register.

In das bitweise adressierbare Register wird mit dem Signal RDDAT der Inhalt der von der ersten und dritten Stufe des zweiten Bitzählers adressierten RAM-Adresse geladen. Danach wird mit dem Bittakt der aktuelle Abtastwert in das von der zweiten Stufe des zweiten Bitzählers adressierte Bit des bitweise adressierbaren Registers übernommen und im nächstfolgenden Intervall mit dem Signal WRDAT auf die gleiche RAM-Adresse zurückgeschrieben. Der Abtastwert zum Zeitpunkt des Bittaktes wird als Informationsbit bezeichnet.

Zusätzlich werden in zwei direkt auf den Korrelationsimpuls folgenden Intervallen in dem für den Datentransfer vorgesehenen Zeitschlitz das Status- und Phasenbyte auf den RAM innerhalb des aktuellen Datenblocks abgespeichert. Dazu generiert die zweite Zeitbasis Steuersignale für Daten- und Adreßsteuerung.

Weiterhin unterstützt das Verfahren einen schnellen blockweisen Zugriff auf die im RAM abgelegten Datenmatrizen über einen synchronen DMA-Kanal für eine Anzahl gleichartiger strukturprogrammierbare Prozessoren, die an ein übergeordnetes Informationsverarbeitungssystem gekoppelt sind. Dazu ist innerhalb des Mikroprogramms ein Taktzustand für DMA-Übertragung enthalten, in dem eine Adresse der DMA-Übertragung gebildet und die Korrelation blockiert wird. Die auf dieser Adresse des RMA abgelegten Daten der Datenmatrix werden an einen DMA-Steuerung weitergeleitet und dort gepuffert. Die Adresse besteht aus einem Bit für Speicherbereichsumschaltung des Eingangspuffers, einem variablen Teil, der mit jedem Takt für DMA-Übertragung inkrementiert wird und einem konstanten Teil, der die Lage des Eingangspuffers im RAM angibt. Der variable Teil der Adresse wird aus dem Zählerstand des Phasen- und Bitzählers der ersten Zeitbasis abgeleitet, wobei sämtliche am DMA-Verkehr teilnehmenden strukturprogrammierbare Prozessoren mit bekannten Synchronisationsverfahren so synchronisiert sind, daß die Inhalte der ersten Zeitbasen identisch sind.

Zur Durchführung des Verfahrens ist der strukturprogrammierbare Prozessor eingangsseitig über Eingänge für Abtastwerte mit einem oder mehreren Ausgängen von nicht gezeigten Analogkomparatoren eines oder mehrerer Datenkanäle verbunden und ausgangsseitig an einem DMA-Bus angeschlossen. Zur Unterstützung des strukturprogrammierbaren Prozessors ist ein Schreib-/Lesespeicher (RAM) angeordnet.

Der strukturprogrammierbare Prozessor kann vorzugsweise aus einer ersten Zeitbasis bestehen, der eingangsseitig der Systemtakt und ein Synchronisationseingang zum Rücksetzen der Zeitbasis zugeordnet sind. Ausgangsseitig ist die Zeitbasis einerseits über eine zweite Zeitbasis und andererseits über einen Adreßrechner mit einer Adreßsteuerung verbunden. Dieser Adreßsteuerung sind weiterhin eingangsseitig Steuerleitungen der ersten Zeitbasis, sowie Adressen der ersten Zeitbasis für den DMA-Zugriff und ausgangsseitig die Adreßleitungen eines RAM zugeordnet. Die erste Zeitbasis ist über einen Initiatorausgang mit einem Korrelator und einem Transversalfilter verbunden und verfügt über einen Steuerausgang der mit einer Datensteuerung verbunden ist. Weiterhin ist ein Ausgang für Bitmuster mit dem Korrelator und eine Steuerleitung mit der DMA-Steuerung verbunden. Dem Korrelator ist eingangsseitig die Datensteuerung und ausgangsseitig das Transversalfilter zugeordnet. Dem Transversalfilter ist weiterhin ausgangsseitig eine Synchronisationssteuerleitung zur zweiten Zeitbasis zugeordnet. Die Datensteuerung ist ausgangsseitig über einen Datenbus mit dem RAM und der DMA-Steuerung verbunden und eingangsseitig über einen Datenbus des Abtastwertes zugeordnet. Die Datensteuerung ist eingangsseitig über einen Bus für STATUS-Informationen mit dem Transversalfilter und über einen Bus für PHASEN-Informationen mit der ersten Zeitbasis verbunden. Der DMA-Steuerung ist ausgangsseitig der DMA-Bus des Systems zugeordnet.

Die erste Zeitbasis besteht aus der Verknüpfung einer Zähleranordnung eines Befehlszählers mit einem ersten Teilungsfaktor mit einem Phasenzähler mit einem zweiten Teilungsfaktor und einem als Binärzähler geschalteten Bitzähler mit einem dritten Teilungsfaktor sowie einem dem Befehlszähler nachgeordneten Befehlsdekoder. Die erste Zeitbasis ist über einen Synchronisationseingang rücksetzbar und wird mit dem Systemtakt getaktet, der sich aus dem Quotienten des Produktes des ersten und zweiten Teilungsfaktors und der Periode des Bittaktes des Senders ergibt. An die Ausgänge des Befehlszählers ist ein Befehlsdekoder angeschlossen, der im Rahmen eines noch zu beschreibenden Verfahrens die Befehle für den DMA-Verkehr, das Lesen/Schreiben von Abtastwerten, die Steuersignale für die Korrelation und für den Adreßrechner sowie der Datensteuer an die entsprechenden Steuerleitungen gibt. Die Ausgänge des Bitzählers sind mit dem Adreßrechner verbunden.

Der Adreßrechner besteht aus einer arithmetisch-logischen Einheit mit Akkumulator oder einer ladbaren Zähleranordnung mit umschaltbarem Dekodernetzwerk. Am Ausgang des Adreßrechners stehen beginnend mit der Adresse des Bitzählers Adressen zur Verfügung, die mit jedem Systemtakt um eine vom Synchronisationsmuster abhängige Konstante verändert werden. Weitere Bestandteile des strukturprogrammierbaren Prozessors sind ein oder mehrere Korrelatoren, deren Ausgänge über ein Transversalfilter eine zweite Zeitbasis synchronisieren, sowie eine DMA-, Daten- und Adreßsteuerung. Die zweite Zeitbasis besteht aus einem zweiten Phasenzähler und einem zweiten Bitzähler mit einem auf das serielle Datenformat abgestimmten Zählumfang. Der Zählumfang ist durch das MODE-Register des Transversalfilters programmierbar.

Die Korrelatoren bestehen jeweils aus einem Eingangsmultiplexer, einem Komparator sowie einem digitalen Integrator. Die Datensteuerung besteht aus einem oder mehreren mit dem Schreibsignal der Abtastwerte getakteten Schieberegistern, einem bitweise adressierbaren Register für Informationsdaten, einem DMA-Register und einem Multiplexer. Das Transversalfilter setzt sich zusammen aus einem als Interpolator geschalteten zweistufigen Schieberegister, an welches ein Dekoder angeschlossen ist, sowie einem nachgeschalteten mehrstufigen Schieberegister, das ebenfalls mit einem Dekoder verbunden ist.

Für den Betrieb in mehreren Synchronisations-Moden ist das Transversalfilter mit mehreren Eingängen für Korrelationsimpulse, denen ein paralleles Eingangsregister und ein Dekoder mit MODE-Register nachgeschaltet sind, angeordnet. Der Dekoder setzt nach Eintreffen von zwei aufeinanderfolgenden Korrelationsimpulsen auf einem der Eingänge des Transversalfilters ein entsprechendes Bit des nachgeschalteten MODE-Registers, dessen Ausgänge den als aktiv erkannten Kanal über einen Multiplexer auf die Eingänge des Vorfilters des Transversalfilters schalten und den Inhalt des MODE-Registers als Bestandteil der Statusinformationen auf den entsprechenden Bus zur Datensteuerung geben sowie den Zählumfang der zweiten Zeitbasis einstellen.

Mehrere zweiteilige strukturprogrammierbare Prozessoren können angeordnet sein, deren Anzahl n der Anzahl der verwendeten Bitmuster entspricht, wobei dem ersten Teil jedes strukturprogrammierbaren Prozessors, bestehend aus Befehlszähler, Phasenzähler, Bitzähler, Befehlsdekoder, Adreßrechner, Korrelator und Transversalfilter jeweils m Kanäle mit n Bitmustern zugeordnet sind (m $\leq$ n), und deren zweite Teile die Zeitbasis über eine Andordnung gesteuert wird, bestehend aus einer Logik, die bei zwei aufeinanderfolgenden Korrelationen das dem erkannten Bitmuster entsprechende Bit in einem Mode-Register setzt, und einem dem MODE-Register nachgeschalteten Dekoder, welcher die notwendigen Betriebsartenumschaltungen (z.B. Zählumfang) in der Zeitbasis vornimmt.

An ausgewählte Adressen des Befehlszählers, des Phasenzählers und des Bitzählers kann ein extern programmierbarer Dekoder zur Erzeugung von Zeitschlitzen für einen DMA-Verkehr im Rahmen eines Systems von mehreren strukturprogrammierbaren Prozessoren angeordnet sein, wobei dem Befehlszähler, dem Phasenzähler und dem Bitzähler ein Rücksetzeingang (SYNC 1) zur Synchronisation mehrerer in einem solchen System arbeitenden strukturprogrammierbare Prozessoren zugeordnet sind.

Kurzbeschreibung der Zeichnung, in der zeigen:

Figur 1     Prinzipschaltbild des strukturprogrammierbaren Prozessors als Beispiel eines RISC-Prozessors
Figur 2     Struktur des Bitmusters und der notwendigen Steuersignale
Figur 3     Signalfluß beim Einspeichern der Abtastwerte
Figur 4     Verzögerung des SYNCB-Impulses
Figur 5     Signalfluß bei der Korrelation der eingespeicherten Abtastwerte
Figur 6     Formatiertes Einschreiben der Datenbits
Figur 7     Aufteilung der RAM-Bereiche zwischen den Prozessen Datenschreiben (-formatieren) und DMA.

Wege zur Ausführung der Erfindung:

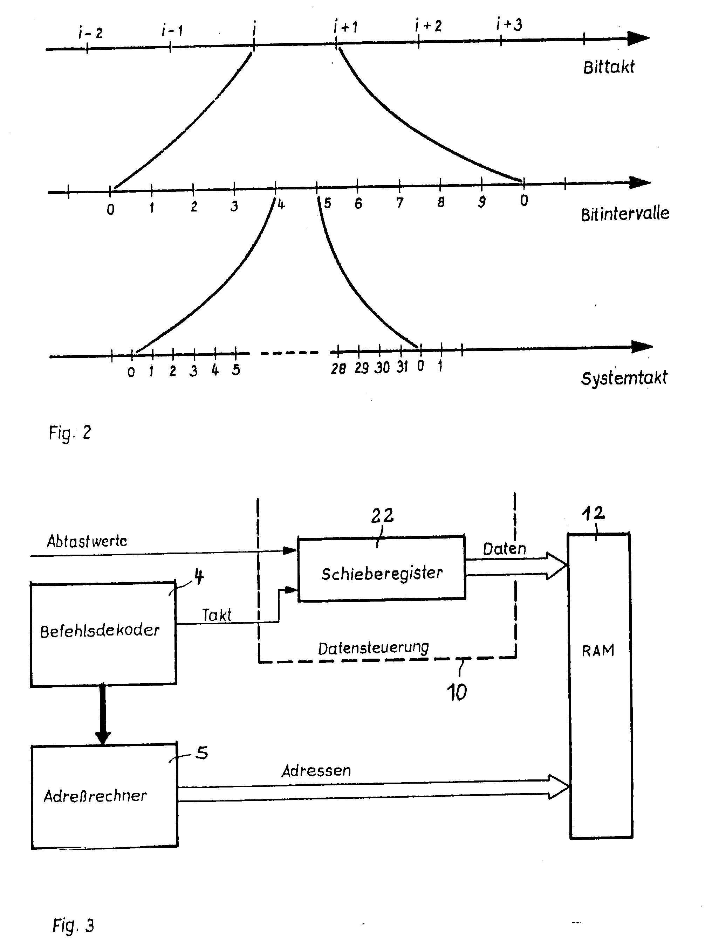

Das Verfahren zur getakteten Korrelations- und Signalverarbeitung mittels eines strukturprogrammierbaren Prozessors oder strukturprogrammierbarer Prozessoren für drahtlose Empfänger in von Sendern ausgestrahlten digitalen Rahmennetzen, Mobilfunknetzen und gleichwertigen Einrichtungen, die im Zeitmultiplexverfahren arbeiten, zum Synchronisieren der Empfänger auf ein Bitmuster mit variablem, zeitdiskretem Bitabstand in Nachrichtenkanälen, ist im Zusammenhang mit Figur 2 erläutert. Dabei wird (a) die Signalfolge des Senders mit bekanntem Takt aber unbekannter Phase mit einem schnelleren Takt, vorzugsweise ganzzahligen Faktor 7-20, abgetastet (a), die Abtastwerte werden binarisiert und abgespeichert (b). Die abgespeicherten Werte werden, beginnend vom aktuellen Abtastwert, einem Korrelator zugeführt, wobei pro Bit der Signalfolge des Senders ein Abtastwert verwendet wird und diese Abtastwerte in einem zeitlichen Abstand von einem Bittakt aufgezeichnet und die Resultate der Korrelation mit einem vorbekannten Synchronisationswert als Folge von Korrelationswerten dargestellt werden, wobei jedem Abtastwert ein derartiger Korrelationswert zugeordnet ist (c). Eine gesuchte Signalfolge gilt als festgestellt, wenn eine Mindestanzahl zusammenhängender korrelierter Werte auftritt (d). Die Folge von Korrelationswerten wird mit dem Abtasttakt über die Länge eines Bittaktes verzögert, wobei dann daraus ein Korrelationsimpuls gebildet wird, wenn die Anzahl der verzögerten Korrelationswerte größer als die halbe Periode des Bittaktes oder gleich der Anzahl der verzögerten Korrelationswerte mit einer Verzögerung kleiner als die halbe Periode des Bittaktes ist (e). Der Korrelationsimpuls stellt die Phase des Bittaktes für die nachfolgend gesuchten Daten ein (f), die der Synchronfolge folgende Bitfolge wird in einem Speicher als Matrix zeilenweise abgespeichert und spaltenweise wieder ausgelesen (blockweise Permutation) (g); mit jedem neuen Abtastwert wird der Zyklus wiederholt (h).

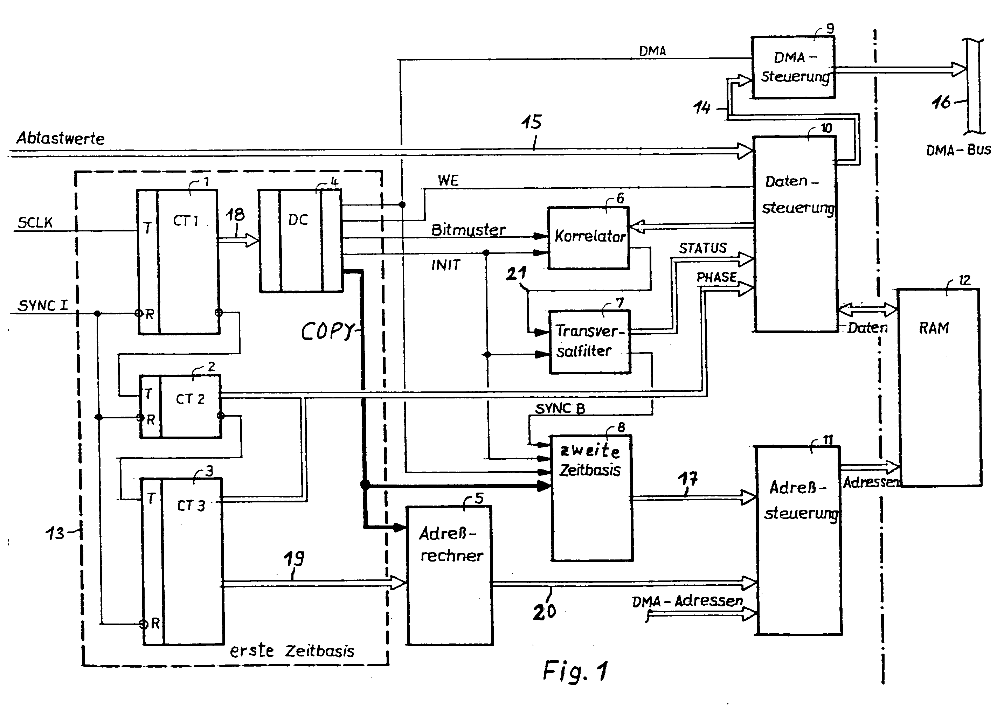

Figur 1 stellt die Struktur eines strukturprogrammierbaren Prozessors am Beispiel eines RISC-Prozessors zur Durchführung des Verfahrens dar, der eine erste Zeitbasis 13 enthält, bestehend aus der Verknüpfung einer Zähleranordnung eines Befehlszählers 1 mit dem Teilungsfaktor FBEF mit einem Phasenzähler 2 mit dem Teilungsfaktor FPH und mit einem als Binärzähler ausgebildeten Bitzähler 3 mit dem Teilungsfaktor FBIT sowie mit einem dem Befehlszähler 1 nachgeordneten Befehlsdekoder 4. Die erste Zeitbasis 13 ist über einen Synchronisationseingang SYNCI rücksetzbar und wird mit dem Systemtakt SCLK getaktet, die beide in den Befehlszähler 1 führen:

$$SCLK = \frac{FBEF \times FPH}{t_{Bittakt}}$$

Die Größe $t_{Bittakt}$ stellt die Periode des Bittaktes des Senders dar. An die Ausgänge 18 des Befehlszählers 1 ist ein Befehlsdekoder 4 angeschlossen, der folgende Befehle auf die entsprechenden Steuerleitungen gibt:

| | |
|---|---|
| DMA | - DMA-Verkehr (auf DMA-Steuerung und zweite Zeitbasis) |
| WRKORR, RDKORR | - Lesen/Schreiben von Korrelationsdaten |
| INIT, BITMUSTER, SCTRL | - Steuersignale für die Korrelation |
| COPY, SUBC1, SUBC2 ... WRDAT, RDDAT | - Steuersignale des Adreßrechners |
| WRPHASE, WRSTATUS | - Steuersignale der Datensteuerung. |

Die Ausgänge (19) des Bitzählers 3 sind mit einem Adreßrechner 5 verbunden. Der Adreßrechner 5 besteht aus einer arithmetisch-logischen Einheit mit Akkumulator oder einer ladbaren Zähleranordnung mit umschaltbarem Dekodernetzwerk, wobei der Adreßrechner 5 keine Übertragungsbehandlung durchführt. Am Ausgang (20) des Adreßrechners 5 stehen, beginnend mit der Adresse des Bitzählers 3, Adressen zur Verfügung, die mit jedem Systemtakt um eine vom Synchronisationsmuster abhängige Konstante, z.B. O, C1, C2... verändert werden können. Die Wortbreite WBITZ des Bitzählers 3 und des Adreßrechners 5 entspricht:

$$WBITZ = \log_2 (\text{Länge des Korrelationsmusters in Takten}) - \log_2 N,$$

wobei N die Anzahl von Abtastwerten, die in einem Wort eines RAM's 12 zusammengefaßt sind, angibt.

Weitere Bestandteile des RISC-Prozessors sind ein oder mehrere Korrelatoren 6, deren Ausgänge 21 über ein Transversalfilter 7 eine zweite Zeitbasis 8 synchronisieren, sowie eine DMA-Steuerung 9, Daten-Steuerung 10 und Adreßsteuerung 11. Die Korrelatoren 6 bestehen jeweils aus einem Eingangsmultiplexer, einem Komparator sowie einem digitalen Integrator. Der Eingangsmultiplexer wird mit dem Low-Teil des Phasenzählers 2 so adressiert, daß an dessen Ausgang die Abtastwerte erscheinen, die zuvor mit Hilfe von Schieberegistern 22 der Datensteuerung 10 unter der gleichen Adresse des Phasenzählers 2 eingeschrieben wurden.

Die Eingänge des Digitalkomparators sind mit dem Ausgang des Eingangsmultiplexers und dem Ausgang BITMUSTER des Befehlsdekoders 4 verbunden.

Das Ausgangssignal des Komparators gelangt, getaktet durch das Steuersignal SCTRL des Befehlsdekoders 4, auf den digitalen Integrator, der durch das Steuersignal INIT aus dem Befehlsdecoder 4 gesetzt werden kann.

Die Datensteuerung 10 besteht aus einem oder mehreren mit dem Steuersignal WRKORR getakteten Schieberregistern 22, einem bitweise adressierbaren Register für die Informationsdaten, einem DMA-Register und einem Multiplexer. Der Multiplexer wird wie folgt angesteuert:

Tab. 1

| Steuersignale und zugehörige Daten im Multiplexer der Datensteuerung 10 beim Schreiben von Daten. | |
|---|---|
| Steuersignal | Datenbus |
| WRKORR | Schieberregister |
| WRPHASE | Phasenzähler 2, Low-Teil des Bitzählers 3 |
| WRSTATUS | Transversalfilter 7, MODE-Erkennung |
| WRDAT | byteweises Auslesen des bitweise adressierbaren Registers |

Ferner werden folgende Lesevorgänge gesteuert:

Tab. 2

| Steuersignale und Prozesse in der Datensteuerung 10 beim Lesen von Daten. | |
|---|---|
| Steuersignal | Vorgang |
| DMA | Lesen des DMA-Registers |
| RDDAT | byteweises Lesen des bitweise adressierbaren Registers |

Die Adreßsteuerung stellt typisch einen Multiplexer dar, der wie folgt angesteuert wird:

| Steuersignal | Adreßbus |
|---|---|
| WRKORR | Adreßrechner 5, High-Teil des Phasenzählers 2 |
| RDDAT, WRDAT | AX8, Zeitbasis 8, xx |
| DMA | /AX8, Phasenzähler 2 + Low-Teil des Bildzählers 3,xx |

Tab. 3  Steuersignale und von der Adreßsteuerung 11 bereitgestellte Adressen

wobei:

xx  Bitkombinationen zur physischen Trennung von Abtastwerten und Informationsdaten (durch die Begrenzung des Zählumfanges des Phasenzählers 2 auf typisch 10 ... 12 Zustände bei 4 bit Wort breite und die vom Zähler nicht benutzten Zustände durch 11B im High-Teil gekennzeichnet)

AX 8 .. MSB des Bitzählers der Zeitbasis 2, trennt Speicherbereiche zum Aufbau bzw. zur Ausgabe von Telegrammen über einen DMA-Kanal.

Die Funktion der genannten Teilschaltungen als Kreuzkorrelator mit einer Wortbasis von 1 bit realisiert sich wie folgt:
Mit dem Signal COPY wird zunächst der Inhalt des Bitzählers 3 in den Adreßrechner 5 kopiert, der Integrator über INIT gesetzt und die Korrelation über SCTRL blockiert. Danach wird mit WRKORR der Inhalt der Schieberegister mit den aktuellen Abtastwerten in den RAM geschrieben.
Im nächstfolgenden und den weiteren Takten ermittelt der Adreßrechner 5 jeweils die den signifikanten Bits des Bitmusters entsprechenden Bitabstände, der Ausgang BITMUSTER des Befehlsdekoders 4 liefert dazu zeitgleich das Referenzmuster, welches auch von einer externen Quelle geliefert werden kann. Am Eingang des Korrelators 6 liegen somit in jedem Takt zwei korrespondierende Werte: der im errechneten Bitabstand zum aktuellen Abtastwert vom RAM ausgelesene vorher gespeicherte und das entsprechende Bit des Referenzmusters. Der Digitalkomparator prüft die Gleichheit beider Werte, wenn der Vergleich durch das Steuersignal SCTRL für gültig erklärt wurde; bei Ungleichheit wird der Digitalkomparator zurückgesetzt. Bei vollständiger Identität der Folgen erhält der Integrator am Ende der Integration den Wert "High", andererseits den Wert "Low".

Dieses als Korrelationsimpuls bezeichnete Signal wird mit dem Steuersignal INIT in das nachfolgende Transversalfilter 7 übernommen, in welchem die Abteilung des optimalen Abtasttaktes realisiert wird, was nachfolgend beschrieben ist. Das Korrelationssignal gelangt über einen Eingang QE auf ein als Interpolator geschaltetes zweistufiges Schieberegister QO, Q1 (Vorfilter), an welches ein Dekoder angeschlossen ist, dessen Ausgang DC folgende Signale liefert:

Tab. 4

| Ausgangssignal DC des zweistufigen Schieberegisters im Transversalfilter 7, wobei QE den Korrelationsimpuls am Eingang des zweistufigen Schieberegisters darstellt und damit Korrelationsstörungen von der Dauer eines Intervalles beseitigt. | | | |
|---|---|---|---|
| QE | Q0 | Q1 | DC |
| 0 | 0 | 0 | 0 |
| 0 | 0 | 1 | 0 |
| 0 | 1 | 0 | 0 |
| 1 | 0 | 0 | 0 |
| 0 | 1 | 1 | 1 |
| 1 | 0 | 1 | 1 |
| 1 | 1 | 0 | 1 |
| 1 | 1 | 1 | 1 |

An dieses zweistufige Schieberegister ist ein ebenfalls mit INIT getaktetes n-stufiges Schieberegister angeschlossen, wobei n annähernd dem Zählumfang des Phasenzählers 2 und somit der maximalen Länge des Korrelationssignales - in Bittakten ausgedrückt - entspricht. An das n-stufige Schieberegister ist ein Dekoder angeschlossen, der mit einer Genauigkeit bis zu einer konstanten Phasenverschiebung die Lage des optimalen Abtasttaktes ableitet. Der Dekoder wird bei von der Registermitte ausgehender symmetrischer Belegung des n-stufigen Schieberegisters aktiv. Am Ausgang des Transversalfilters 7 entsteht somit ein Impuls mit einer konstanten Laufzeit zur Mitte des Korrelationssignales - der Synchronisationsimpuls SYNCB für die zweite Zeitbasis 8.

Die Schaltung ist für mehrere Bitmuster in einem Signal auslegbar, im Ausführungsbeispiel werden 2 verschiedene Synchronisationsmuster betrachtet.

Die Korrelation auf 2 Bitmuster erfolgt vorzugsweise in zwei parallel arbeitenden, auf jeweils eines der Bitmuster untersuchende RISC-Prozessoren des beschriebenen Typs. Die Ergebnisse der Korrelation erscheinen an entsprechenden Steuerausgängen für Korrelationsimpulse der beiden RISC-Prozessoren und werden in der nachfolgend beschriebenen Logik zur MODE-Erkennung genutzt. Bei zwei aufeinanderfolgenden erfolgreichen Korrelationen wird das Bitmuster, auf das der jeweilige Prozessor korreliert, als erkannt gewertet und das entsprechende Bit in dem Transversalfilter 7 nachgeschalteten MODE-Register gesetzt. Auf die weiterverarbeitende Schaltung - Transversalfilter 7 - wird über Multiplexer nur noch das gültige Korrelationssignal weitergeleitet. Das MODE-Bit wird zur Steuerung des Zählumfangs der zweiten Zeitbasis 8 verwendet.

Zur Herstellung des Zeitbezugs zwischen Sender und Empfänger ist im selben die mit INIT getaktete, mit SYNCB auf den Sender synchronisierte und mit diesem synchron laufende Zähleranordnung zweite Zeitbasis 8 angeordnet, die aus einem zweiten Phasenzähler und einem mehrstufigen zweiten Bitzähler besteht.

Die Permutation der Zeilen und Spalten einer n x m -Datenmatrix erfolgt durch die besondere Zuordnung der Adressen des Bitzählers in Verbindung mit einem bitweise adressierbaren Register mit typisch 8 bit Länge. Der zweite Bitzähler ist kaskadiert, eine erste Stufe hat den Zählumfang 2 x m, eine zweite Stufe hat den Zählumfang, der der Länge des des bitweise adressierbaren Registers entspricht, typischerweise 8, eine dritte Stufe den Zählumfang int (n/8).

Diese Stufen bilden wie folgt die Adressen für den Datenspeicher:

$$(ADR) = (1.\ Stufe)\ (3.\ Stufe)\ (const).$$

Die zweite Zählstufe adressiert die Bitposition des Datenbits bei der Manipulation im bitweise adressierbaren Register.

Der RISC-Prozessor bearbeitet zeitmultiplex drei Prozesse, die im folgenden näher beschrieben werden; der Speicherzugriff ist derart organisiert, daß jeder Prozeß einen anderen Bereich im RAM bedient.

1. Erkennen eines bestimmten Bitmusters und daraus abgeleitet die Feststellung von Phasenlage und Lage der Bitkante des Signals (Synchronisation).
2. Abtasten und byte-weise Formatierung von Daten in einem RAM.
3. DMA-Prozeß

1. Mustererkennung (Synchronisation):

Aufgabe dieses Teilschrittes ist die Synchronisation der zweiten Zeitbasis 8 auf die Phasenlage des Senders. Das zu erkennende Bitmuster tritt in Abhängigkeit vom Sendermodus entweder als zusammenhängendes Muster (konzentrierter Mode) oder zeitmultiplex innerhalb eines laufenden Datenstromes (dispersiver Mode) auf. Weiterhin ist zu beachten, daß das empfangene Signal verrauscht ist. Die Synchronisation erfolgt deshalb mit dem Ziel, eine Signalabtastung in Bitmitte zu gewährleisten.

Zur Mustererkennung wird im Ausführungsbeispiel ein Bittakt in 10 Intervalle unterteilt. Für jedes Intervall wird ein Vergleich der entsprechenden Abtastwerte des jeweiligen Bits mit dem Muster in Echtzeit durchgeführt. Das Bitmuster und die notwendigen Steuersignale werden durch den Befehlsdekoder 4 getaktet vom Befehlszähler 1 bereitgestellt, wie dargestellt in Fig. 1 und 2. Im Adreßrechner 5 werden die Adressen der Abtastwerte im Speicher berechnet. Der Prozeß der Synchronisation kann in zwei Schritten betrachtet werden.

1. Einspeicherung der Abtastwerte, Fig. 3 und
2. Auswertung der eingespeicherten Abtastwerte.

Die entsprechenden Abtastwerte und das Bitmuster werden dem Korrelator 6 zugeführt. Stellt dieser eine Übereinstimmung der Werte mit dem Muster über die im Ausführungsbeispiel verwendeten 28 Korrelationstakte fest, so wird das Korrelationssignal mit High-Pegel an das Transversalfilter 7 weitergeleitet. Je geringer das Signal/Rauschverhältnis des Eingangssignals ist, um so kürzer ist die Folge von Korrelationsimpulsen. Ein spezielles Vorfilter gewährleistet eine Synchronisation nach mindestens 2 aufeinanderfolgenden erfolgreichen Korrelationen und interpoliert einzelne Bitfehler einer gestörten Folge von Korrelationsimpulsen. Das Transversalfilter 7 stellt ein Schieberegister mit angeschlossenem Dekoder dar, welcher bei symmetrischer (von der Registermitte ausgehender) Einspeicherung von High-Zuständen den Synchronisationsimpuls SYNCB für die zweite Zeitbasis 8 in konstanter Phase zur Bitmitte abgibt. Der Ausfall der Korrelation für die Zeitdauer genau eines Intervalls (Burststörquelle) führt nicht zur Beeinträchtigung der Arbeit des Transversalfilters 7.

Das Korrelationssignal nimmt unabhängig von seiner aktuellen Breite eine symmetrische Lage, bezogen auf die Bitmitte, im letzten Bit des Bitmusters ein (Tab. 5):

Tab.5

| Lage des unterschiedlich breiten Korrelationssignals innerhalb des letzten Bits des Bitmusters | | | | | | | | | |
|---|---|---|---|---|---|---|---|---|---|
| Länge des Korrelationssignals (Intervalle) | Lage des Korrelationssignals innerhalb des letzten Bits des Musters | | | | | | | | |
| 2 | 0 | 0 | 0 | 0 | 1 | 1 | 0 | 0 | 0 | 0 |
| 3 | 0 | 0 | 0 | 0 | 1 | 1 | 1 | 0 | 0 | 0 |
| 4 | 0 | 0 | 0 | 1 | 1 | 1 | 1 | 0 | 0 | 0 |
| 5 | 0 | 0 | 0 | 1 | 1 | 1 | 1 | 1 | 0 | 0 |
| 6 | 0 | 0 | 1 | 1 | 1 | 1 | 1 | 1 | 0 | 0 |
| 7 | 0 | 0 | 1 | 1 | 1 | 1 | 1 | 1 | 1 | 0 |
| 8 | 0 | 1 | 1 | 1 | 1 | 1 | 1 | 1 | 1 | 0 |
| 9 | 0 | 1 | 1 | 1 | 1 | 1 | 1 | 1 | 1 | 1 |
| 10 | 1 | 1 | 1 | 1 | 1 | 1 | 1 | 1 | 1 | 1 |

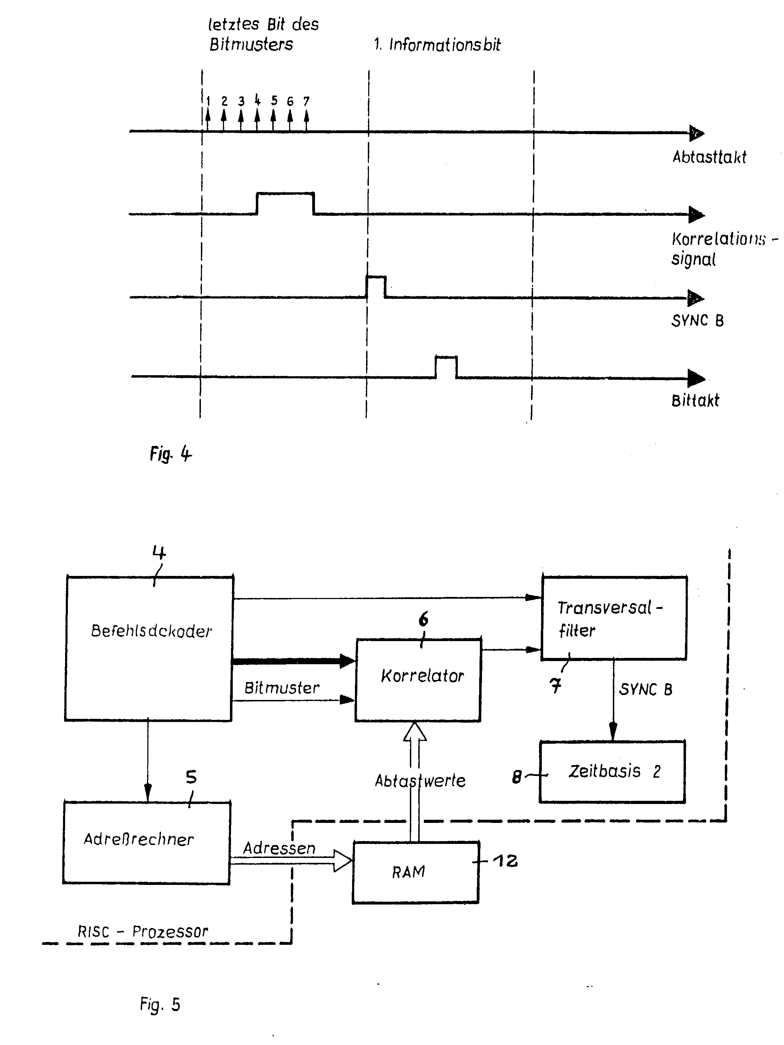

Die Laufzeit des SYNCB-Impulses, gemessen von der Bitkante des letzten Bits des Bitmusters bis zur LH-Flanke des SYNCB-Impulses, ist unabhängig von der Anzahl der Korrelationsimpulse. Im Beispiel beträgt die Laufzeit 11 (+0, -1) Intervalle. Die Verzögerung entfällt auf das Vorfilter (1 Intervall) und das Hauptfilter (10 Intervalle). Die Toleranz entsteht durch mögliche Schwankungen der Symmetrie der Lage der Korrelationsimpulse zur Bitmitte bei einer ungeraden Impulsanzahl. Mit dem SYNCB-Impuls wird die zweite Zeitbasis so gesetzt, daß der zweite Phasenzähler innerhalb der zweiten Zeitbasis den Bittakt generiert. Ebenso wird der Rahmen für die Wortsynchronisation durch Rücksetzen der zweiten Zeitbasis initialisiert, wobei in Figur 4 die Signale und in Figur 5 das Blockschaltbild hierfür dargestellt sind.

2. Datenverkehr

Aufgabe des Datenverkehrs ist es, die phasenrichtig abgetasteten Informationsbits abzuspeichern und zu einem byte-orientierten Datenblock zu formatieren. Durch Datenlese- und -schreiboperationen sowie dazwischen stattfindenden Bitmanipulationen wird eine byte-weise Formatierung der Datenbits im Speicher entsprechend nachfolgender Tabelle gewährleistet, wobei K=int (n(8)+1) gilt.

| Block 1 | | | | Block 2 | | Block k | |
|---|---|---|---|---|---|---|---|
| 1 m+1 | 2m+1 ...... | 7m+1 | | ... ... ... | ... ... | (n-2)m+1 | (n-1)m+1 |
| 2 m+2 | ... | ...... | ... | | | | (n-1) m+2 |
| 3 ... | ... | | | ... | ... | ... | ... |
| 4 ... | ... | ... | | ... | ... | ... | ... |
| . ... ... | ... | ... | | ... | ... | ... | ... |
| . ... ... | ... | ... | | ... | ... | ... | ... |
| m 2m | 3m | 8m | | ... | ... ... | (n-1)m | nm |

*Tab.6 Aufbau des byte-organisierten Datenblocks*

Dieses Ziel wird durch die Zählerstruktur der zweiten Zeitbasis 8 (speziell des Bitzählers), die Beschaltung der Adreßleitungen (sieheTab. 7), das bitweise adressierbare Register in der Datensteuerung im Zusammenhang mit dem 8-bit-Datenbus erreicht. Die folgende Tabelle zeigt die Adreßorganisation für Datenlese- undschreiboperationen (Tab. 7 a) und die Zählerstruktur des Bitzählers in der zweiten Zeitbasis 8 (Tab.7 b) für ein maximal 16 bit langes Datenwort (d.h. 2 Blöcke).

Tab. 7

| Adreßorganisation für Datenlese- und -schreiboperationen (a) und Zählerstruktur des Bitzählers der zweiten Zeitbasis 8(b) | | | | | | |
|---|---|---|---|---|---|---|
| ADR 0 | 1 | Bitzähler in der | AX 0 | | | |
| ADR 1 | 1 | zweiten Zeitbasis 8: | AX 1 | | | |
| ADR 2 | AX 7 | | AX 2 | | | |
| ADR 3 | AX 0 | | AX 3 | | | |
| ADR 4 | AX 1 | | | AX 4 | | Bitadresse |
| ADR 5 | AX 2 | | | AX 5 | | im Byte |
| ADR 6 | AX 3 | | | AX 6 | | |
| ADR 7 | ORG | | AX 7 | | | Block 1/2 |
| ADR 8 | AX 8 | | AX 8 | | | RAM-Bereich |
| ADR 9 | 0 | | | | | |
| ADR 10 | 0 | | | | | |
| a) | | | b) | | | |

Der Prozeß der Datenformatierung läuft wie folgt ab:

- Lesen der Datenbytes entsprechend der Adresse gem. Tab. 7, a; mit dem Si gnal RDDAT wird ein Byte aus dem RAM in das bitweise adressierbare Register der Datensteuerung 10 eingespeichert,
- anhand der Adresse AX 4 ... AX 6 der zweiten Zeitbasis wird die Position des einzulesenden Informationsbits ermittelt und das aktuelle Informationsbit mit dem Bittakt der zweiten Zeitbasis auf die so adressierte Position eingetragen

- mit dem Signal WRDAT wird das so manipulierte Datenbyte in einem nachfolgenden Takt auf die unveränderte Adresse nach Tab. 7, a im RAM zurückgespeichert,
- der Prozeß wiederholt sich n x m mal, danach werden Schreib- und Leseoperationen unterbunden.

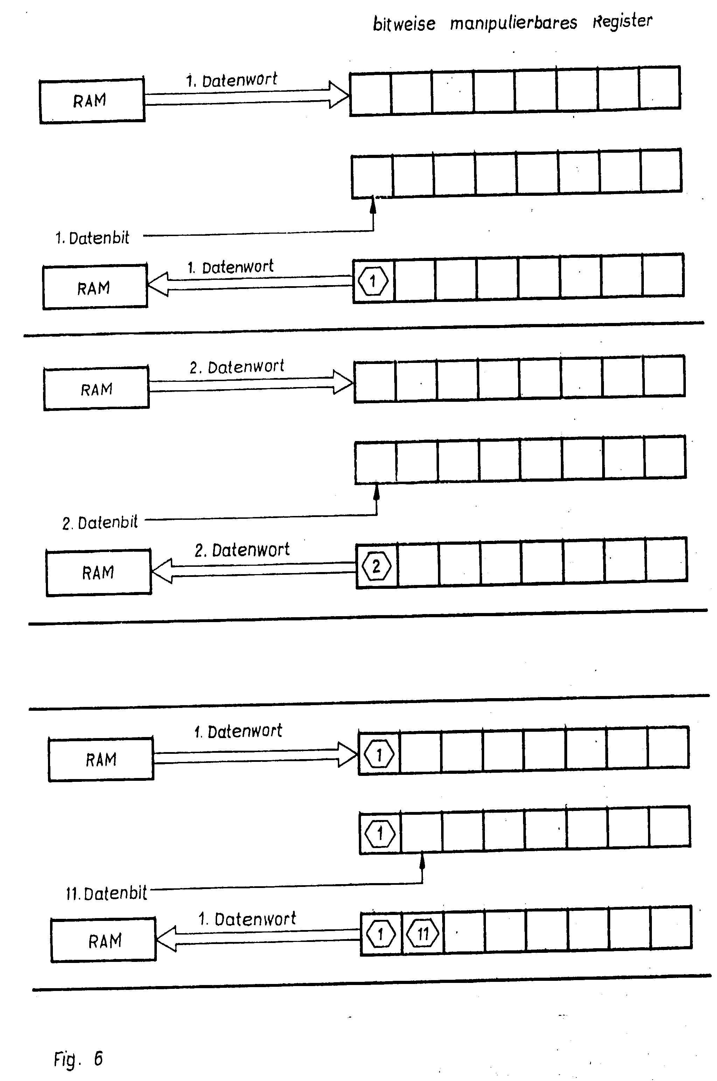

Die Figur 6 dient der Illustration dieses Ablaufes.

3. DMA-Prozeß

Der DMA-Prozeß hat zum Ziel, die schnelle Datenübertragung einer größeren Zahl von RISC-Prozessoren auf einen gemeinsamen DMA-Bus zu organisieren und somit die gleichzeitige Auswertung einer größeren Anzahl von seriellen Datenkanälen durchzuführen.

Die synchrone DMA-Schnittstelle ordnet jedem RISC-Prozessor einen programmierbaren Zeitschlitz für die blockweise Eingabe und einen für die blockweise Ausgabe von Daten in einem übergeordneten Zeitrahmen zu. Die Zeitschlitze werden aus Adressen der ersten Zeitbasis der RISC-Prozessoren, die extern synchronisiert sind, gebildet. Die hohe Transferrate im Zeitrahmen des DMA-Betriebs gewährleistet die vollständige Übertragung jedes eintreffenden Datenblocks innerhalb der Blockgrenzen der seriellen Übertragung. Die blockweise Eingabe dient der Programmierung von analogen Paramtem von Vorverarbeitungseinheiten.

Der DMA-Betrieb ist derart organisiert, daß der DMA-Prozeß stets auf einen während der Ausgabe schreibgeschützten Speicherbereich zugreift, in dem die Datenformatierung bereits beendet ist. In der folgenden Tabelle ist die Adressorganisation des DMA-Zugriffs im Vergleich zur Datenformatierung dargestellt:

| | Daten lesen (DMA) | Daten schreiben |
|---|---|---|
| ADR 0 | 1 | 1 |
| ADR 1 | 1 | 1 |
| ADR 2 | AY 4 | AX 7 |
| ADR 3 | AP 0 | AX 0 |
| ADR 4 | AP 1 | AX 1 |
| ADR 5 | AP 2 | AX 2 |
| ADR 6 | AP 3 | AX 3 |
| ADR 7 | AZ 0 | ORG |
| ADR 8 | /AX 8 | AX 8 |
| ADR 9 | 0 | 0 |
| ADR 10 | 0 | 0 |

*Tab. 8  Adreßorganisation für Datenschreiboperationen im Vergleich zum DMA-Zugriff*

Wie aus dieser Tabelle 8 ersichtlich, steuert die Adresse AX 8 die Bereiche im RAM für die entsprechenden Datenoperationen.

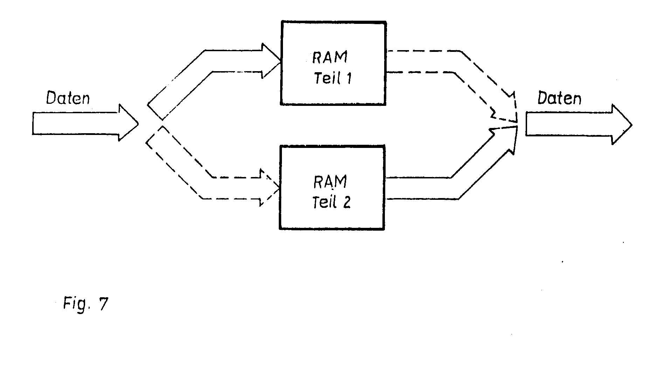

Gemäß der Figur 7 ist die Aufteilung der RAM-Bereiche zwischen den Prozessoren Datenschreiben (-formatieren) und DMA ersichtlich.

Aus dieser Speicherorganisation resultiert ebenfalls die Forderung, daß der DMA-Prozeß schneller sein muß, als die Datenformatierung. Der Zeitschlitz der DMA-Ausgabe wird durch Vergleich von hardwaremäßig eingestellten Systemadressen mit dem Zählerstand des Bitzählers 3 der ersten Zeitbasis festgestellt.

Ein während der DMA-Übertragung im programmierbaren Zeitschlitz Low-aktives Signal verhindert ein Umschalten des schreibgeschützten Speicherbereichs (Adresse AX 8) während des DMA-Zugriffs und sichert somit den ordnungsgemäßen Abschluß der DMA-Übertragung.

Die ebenfalls mit ausgegebenen Organisationsdaten umfassen Phasen- und Statusinformationen. Aus den Zählerständen des Phasenzählers 2 und dem Low-Teil des Bitzählers 3 bestimmt sich die Systemphase, d.h. die Zeitdifferenz zwischen dem Systemsynchronisationsimpuls SYNCI und dem Bitsynchronimpuls SYNCB des jeweiligen Senders. Diese Information dient einerseits zur Abschätzung der Entfernung zum Sender und erlaubt andererseits Aussagen über die Stabilität der Phasenlage (Signal-Rausch-Verhältnis). Der Stand des n-stufigen Schieberegisters des Transversalfilters 7 - Statusinformationen - erlaubt ebenfalls Aussagen über die Zuverlässigkeit der empfangenen Daten. Sie repräsentieren die Umgebung der Mitte dieses Schieberegisters zum Zeitpunkt des SYNCB-Impulses. Die Anzahl der gesetzten Bits repräsentiert die Anzahl der korrekt ermittelten Korrelationsimpulse und ist ein Maß für das Signal/ Rauschverhältnis.

Gewerbliche Anwendbarkeit:

Die Erfindung kann insbesondere zum Synchronisieren von drahtlosen Empfängern in von Sendern ausgestrahlten digitalen Rahmennetzen, Mobilfunknetzen (C- oder D-Netz) und gleichwertigen Einrichtungen, die im Zeitmultiplexverfahren arbeiten, angewendet werden.

Liste der Bezugszeichen und der Bezeichnungen:

| | |
|---|---|
| 1 | Befehlszähler |
| 2 | Phasenzähler |
| 3 | Bitzähler |
| 4 | Befehlsdekoder |
| 5 | Adreßrechner |
| 6 | Korrelator |
| 7 | Transversalfilter |
| 8 | zweite Zeitbasis |
| 9 | DMA-Steuerung |
| 10 | Datensteuerung |
| 11 | Adreßsteuerung |
| 12 | RAM |
| 13 | erste Zeitbasis |
| 14 | Ausgang der Datensteuerung 10 |
| 15 | Eingang ABTASTWERTE in die Datensteuerung 10 |
| 16 | DMA-Bus |
| 17 | Ausgang der zweiten Zeitbasis 8 in die Adreßsteuerung 11 |
| 18 | Ausgang des Befehlszählers 1 in den Befehlsdecoder 4 |
| 19 | Ausgang des Bitzählers 3 in den Adreßrechner 5 |
| 20 | Ausgang des Adreßrechners 5 in die Adreßsteuerung 11 |
| 21 | Ausgang des Korrelators 6 in das Transversalfilter 7 |
| 22 | Schieberegister der Datensteuerung 10 |
| AP i | Adresse, Zählerstand des Phasenzählers 2 in der ersten Zeitbasis |
| AX i | Adresse, Zählerstand des Bitzählers in der zweiten Zeitbasis S |
| AX S | MSB des Bitzählers der zweiten Zeitbasis S bestimmt den Bereich im RAM, auf den die aktuelle Datenoperation (Datenformatierung, DMA) zugreift |
| AY i | Adresse, Zählerstand des Befehlszählers 1 in der ersten Zeitbasis |
| AZ i | Adresse, Zählerstand des Bitzählers 3 in der ersten Zeitbasis BITMUSTER Steuersignal, liefert das mit den aktuellen Abtastwerten im Korrelator 6 zu vergleichende Referenzmuster |
| COPY | Steuersignal, kopiert den Inhalt des Bitzählers 3 der ersten Zeitbasis in den Adreßrechner 5 |
| CT 1 | Befehlszähler 1 in der ersten Zeitbasis |
| CT 2 | Phasenzähler 2 in der ersten Zeitbasis |
| CT 3 | Bitzähler 3 in der ersten Zeitbasis |
| DC | Befehlsdekoder 4 in der ersten Zeitbasis |
| DMA | Steuersignal, aktiv bei Ablauf des DMA-Zugriffs auf die vorverarbeiteten Daten, aktiviert die DMA-Steuerung und verhindert ein Umschalten der Adresse AX S (ordnungsgemäßer Abschluß des DMA-Zugriffs) |
| FBEF FDIT | Teilungsfaktor des Befehlszählers 1 in der ersten Zeitbasis Teilungsfaktor des Bitzählers 3 in der ersten Zeitbasis |

| | |
|---|---|
| FPH | Teilungsfaktor des Phasenzählers 2 in der ersten Zeitbasis |
| INIT | Steuersignal, setzt den Digitalintegrator im Korrelator 6, Schiebetakt für das Transversalfilter 7 |
| MODE | Steuersignal, schaltet den Zählumfang des Bitzählers in der zweiten Zeitbasis S |
| ORO | Organisationsdaten, umfassen Status- und Phaseninformationen zur laufenden Übertragung |
| QO | erste Stufe des zweistufigen Schieberegisters im Transversalfilter 7 |
| Q1 | zweite Stufe des zweistufigen Schieberegisters im Transversalfilter 7 |
| QE | Eingang ds zweistufigen Schieberegisters im Transversalfilter 7 |
| RDDAT | Steuersignal, Lesen von Daten aus dem RAM (Teilprozeß Datenformatierung) |
| SCLK | Systemtakt |
| SCTRL | Steuersignal, sperrt bzw. ermöglicht den Vergleich des aktuellen Abtastwertes mit dem korrespondierenden Wert des vorgegebenen Synchronisationsmusters |
| SUB1, SUB2 | Steuersignale für den Adreßrechner 5 zur Bestimmung der dem konkreten Synchronisationsmuster entsprechenden signifikanten Bitabstände |
| SYNCB | Synchronisationsimpuls für die zweite Zeitbasis S, gewährleistet eine phasenmäßige Synchronisation der Datenabtastung auf den jeweiligen Sender |
| SYNCI | Synchronisationsimpuls für die Zähler der ersten Zeitbasis, synchronisiert den strukturprogrammierbaren Prozessor innerhalb des übergeordneten Systems |
| WBITZ | Wortbreite des Bitzählers 3 der ersten Zeitbasis sowie des Adreßrechners 5 |
| WE | Steuersignal, bidirektionale Datenports werden auf "Schreiben" geschaltet |
| WRDAT | Steuersignal, Schreiben von Daten auf den RAM (Teilprozeß Datenformatierung) |
| WRKORR | Steuersignal, Schreiben von Abtastworten auf den RAM (Teilprozeß Synchronisation) |
| WRPHASE | Steuersignal, Schreiben der Phaseninformationen zu einem Datenpaket |
| SRSTATUS | Steuersignal, Schreiben der Statusinformationen zu einem Datenpaket |

**Patentansprüche**

1. Verfahren zur getakteten Korrelations- und Signalverarbeitung mittels strukturprogrammierbarem Prozessor für drahtlose Empfänger in von Sendern ausgestrahlten digitalen Rahmennetzen, Mobilfunknetzen und gleichwertigen Einrichtungen, die im Zeitmultiplexverfahren arbeiten zum Synchronisieren der Empfänger auf ein Bitmuster mit variablem, zeitdiskretem Bitabstand in Nachrichtenkanälen,
gekennzeichnet durch folgende Merkmale:

   a) die Signalfolge des Senders mit bekanntem Takt aber unbekannter Phase wird mit einem schnelleren Takt, vorzugsweise ganzzahligen Faktor 7-20, abgetastet,
   b) die Abtastwerte werden binarisiert und abgespeichert
   c) die abgespeicherten Werte werden, beginnend vom aktuellen Abtastwert, einem Korrelator zugeführt, wobei pro Bit der Signalfolge des Senders ein Abtastwert verwendet wird und diese Abtastwerte in einem zeitlichen Abstand von einem Bit-takt aufgezeichnet und die Resultate der Korrelation mit einem vorbekannten Synchronisationswert als Folge von Korrelationswerten dargestellt werden, wobei jedem Abtastwert ein derartiger Korrelationswert zugeordnet ist
   d) eine gesuchte Signalfolge gilt als festgestellt, wenn eine Mindestanzahl zusammenhängender korrelierter Werte auftritt,
   e) die Folge von Korrelationswerten wird mit dem Abtasttakt über die Länge eines Bittaktes verzögert, wobei dann daraus ein Korrelationsimpuls gebildet wird, wenn die Anzahl der verzögerten Korrelationswerte größer als die halbe Periode des Bit-taktes oder gleich der Anzahl der verzögerten Korrelationswerte mit einer Verzögerung kleiner als die halbe Periode des Bittaktes ist
   f) der Korrelationsimpuls stellt die Phase des Bittaktes für die nachfolgend gesuchten Daten ein
   g) die der Synchronfolge folgende Bitfolge wird in einem Speicher als Matrix zeilenweise abgespeichert und spaltenweise wieder ausgelesen (blockweise Permutation)
   h) mit jedem neuen Abtastwert wird der Zyklus wiederholt.

2. Verfahren nach Anspruch 1, dadurch gekennzeichnet,
daß die Mitte des Bereichs der Abtastwerte mit hoher Korrelation die Bitmitte darstellt und für die folgenden Abtastungen als Abtastzeitpunkt (Bittakt) genutzt wird, wobei der Bit-Mittentakt eine zweite Zeitbasis liefert.

3. Verfahren nach Anspruch 1, dadurch gekennzeichnet,
daß der strukturprogrammierbare Prozessor gemäß des Anspruchs 1 folgende Schritte in geordneter Reihenfolge im Systemtakt (SCLK) ausführt:

a) Übernahme des Standes des Bitzählers (3) als Basisadresse in den Adreßrechner (5) (mit dem Signal COPY), Übernahme des Korrelationsergebnisses vom Korrelator (6) in ein Transversalfilter (7) und anschließende Initialisierung des Korrelators (6) durch ein erstes Steuersignal (INIT),
b) Schreiben (WE) des aktuellen Abtastwertes in ein RAM (12) auf die durch Phasenzähler (2) und Bitzähler (3) bestimmte Adresse,
c) Lesen des RAM (12) auf der Adresse, die dem differentiellen Bitabstand des ersten signifikanten Bits zur Basisadresse im Bitzähler (3) entspricht und anschliessende Ausgabe des ersten Bits des Referenzmusters (BITMUSTER) vom Befehlsdekoder (4) sowie Freigabe des Korrelators (6) mit einem zweiten Steuersignal (SCTRL),
d) Wiederholung des vorangegangenen Schrittes mit dem nächsten differentiellen Bitabstand und dem nächsten Bit des Referenzmusters, wobei die Adresse, die dem differentiellen Bitabstand entspricht, im Adreßrechner (5) durch Addition zur Basisadresse gewonnen wurde.

4. Verfahren nach einem der vorherigen Ansprüche, dadurch gekennzeichnet,
daß zur Formatierung einer Matrix aus einem seriellen Datenstrom, dessen Bits spaltenweise in die Zielmatrix einzutragen sind mit dem synchron zum Bitstrom laufenden zweiten Zähler in der zweiten Zeitbasis (8) die Wortadresse im RAM (12) und die Bitadresse des abzuspeichernden Datenbits im Datenwort ermittelt wird, daß bei der Dateneinspeicherung ein komplettes Datenwort bzw. Teil desselben aus dem RAM (12) in ein bitweise manipulierbares Register der Datensteuerung (10) geladen wird, daß das einzuspeichernde Bit seiner Position gemäß mit Bittakt in das Register eingespeichert wird und daß danach das gesamte Datenwort bzw. Teil desselben in den RAM (12) auf die unveränderte Wortadresse zurückgeschrieben wird.

5. Verfahren nach einem der vorherigen Ansprüche, dadurch gekennzeichnet,
daß die Prozesse des formatierten Dateneinschreibens und des Datenauslesens (DMA-Zugriff) asynchron zueinander in zwei verschiedenen Speicherbereichen innerhalb des physisch nicht belegten Adreßraums des RAM (12) ablaufen, daß nach dem Blockende beim Dateneinschreiben der Speicherbereich umgeschaltet wird, wobei das Umschalten sofort durchgeführt wird, wenn auf den anderen Speicherbereich kein DMA-Zugriff erfolgt und das Umschalten bis zum Abschluß des DMA-Zugriffs verzögert wird, falls ein solcher zu diesem Zeitpunkt stattfindet, daß der DMA-Zugriff synchron zu einer externen Zeitbasis mit wesentlich höherer Datenrate als das Einschreiben erfolgt.

6. Verfahren nach einem der Ansprüche 1 bis 5, dadurch gekennzeichnet,
daß zur Korrelation auf zwei Bitmuster mindestens zwei strukturprogrammierbare Prozessoren parallel arbeiten und die Ergebnisse der Korrelation zur MODE-Erkennung zur Steuerung der zweiten Zeitbasis 8 benutzt werden.

7. Verfahren nach Anspruch 1 oder 6, dadurch gekennzeichnet,
daß der strukturprogrammierbare Prozessor oder die strukturprogrammierbaren Prozessoren RISC- oder FORTH-Prozessoren sind.

8. Schaltungsanordnung zur getakteten Korrelations- und Signalverarbeitung mittels strukturprogrammierbarem Prozessor für drahtlose Empfänger in von Sendern ausgestrahlten digitalen Rahmennetzen, Mobilfunknetzen und gleichwertigen Einrichtungen, die im Zeitmultiplexverfahren arbeiten zum Synchronisieren der Empfänger auf ein Bitmuster mit variablem, zeitdiskretem Bitabstand in Nachrichtenkanälen, dadurch gekennzeichnet,
daß einem Befehlszähler (1) ein Befehlsdekoder (4) und über einen Phasenzähler (2) ein Bitzähler (3) nachgeordnet sind, die eine erste Zeitbasis (13) bilden, daß dem Befehlszähler (1) eingangsseitig ein Systemtakt (SCLK) und dem Befehlszähler (1), dem Phasenzähler (2) und dem Bitzähler (3) ein Synchronisationseingang (SYNCI) zum Rücksetzen der ersten Zeitbasis (13) zugeordnet sind, wobei der Befehlsdekoder (4) ausgangsseitig durch ein Steuersignal (COPY) mit einer zweiten Zeitbasis (8) und parallel dazu über einen Adreßrechner (5) mit einer Adreßsteuerung (11), über einen Initiatorausgang (INIT) mit einem Korrelator (6) und einem Transversalfilter (7) sowie einem Steuerausgang (IWE) mit einer Datensteuerung (10), einem Ausgang für Bitmuster (BITMUSTER) mit dem Korrelator (6) sowie einer Steuerleitung (DMA) mit einer DMA-Steuerung (9) und parallel dazu der zweiten Zeitbasis (8) verbunden ist, daß der Phasenzähler (2) über einen Datenbus (PHASE) mit der Datensteuerung (10) und dem Bitzähler (3) und der Bitzähler (3) mit dem Adreßrechner (5) verbunden ist, daß dem Korrelator (6) eingangsseitig die Datensteuerung (10) und ausgangsseitig der Transversalfilter (7) und dem Transversalfilter (7) ausgangsseitig ein Datenbus (STATUS) zur Datensteuerung (10) und eine Synchronisationssteuerleitung (SYNCB) zur Zeitbasis (8) zugeordnet ist, daß die Datensteuerung (10) ausgangsseitig über einen bidirektionalen Datenbus (DATEN) mit einem RAM (12) und über einen weiteren Datenbus (14) mit der DMA-Steuerung (9) verbunden ist und eingangsseitig über einen weiteren Datenbus (15) die Abtastwerte erhält, und daß die DMA-Steuerung (9) ausgangsseitig einem DMA-Bus (16) zugeordnet ist, und daß der Ausgang (17) der zweiten Zeitbasis (8) über die Adreßsteuerung (11) mit dem RAM (12) verbunden ist.

9. Schaltungsanordnung nach Anspruch 8, dadurch gekennzeichnet,
daß das Transversalfilter (7) aus einem Vor- und Hauptfilter besteht und das Vorfilter ein zweistufiges Schieberegister mit Dekoder darstellt, der am Ausgang ein Signal liefert, wenn bei zwei von drei aufeinanderfolgenden Abtastzeitpunkten der Korrelator (6) ein Signal liefert, wobei das Hauptfilter ein k-stufiges Schieberegister mit Dekoder ist wobei, k= 50... 100 % des Zählumfanges des Phasenzählers (2).

10. Schaltungsanordnung nach Anspruch 8, dadurch gekennzeichnet,
daß die Taktfrequenz des Befehlszählers (1) so gewählt ist, daß sie um den Faktor des Zählumfanges von Befehlszähler (1) und Phasenzähler (2) größer ist als die Baudrate des Senders.

11. Schaltungsanordnung nach Anspruch 8, dadurch gekennzeichnet,
daß mehrere zweiteilige strukturprogrammierbare Prozessoren angeordnet sind, deren Anzahl n der Anzahl der verwendeten Bitmuster entspricht, wobei dem ersten Teil jedes strukturprogrammierbaren Prozessors, bestehend aus Befehlszähler (1), Phasenzähler (2), Bitzähler (3), Befehlsdekoder (4), Adreßrechner (5), Korrelator (6) und Transversalfilter (7) jeweils m Kanäle mit n Bitmustern zugeordnet sind (m≤n), und deren zweite Teile die Zeitbasis (8) über eine Andordnung, bestehend aus einer Logik, die bei zwei aufeinanderfolgenden Korrelationen das dem erkannten Bitmuster entsprechende Bit in einem Mode-Register setzt, und einem dem MODE-Register nachgeschalteten Dekoder, welcher die notwendigen Betriebsartenumschaltungen in der Zeitbasis (8) vornimmt, gesteuert wird.

12. Schaltungsanordnung nach Anspruch 8, dadurch gekennzeichnet,
daß an ausgewählte Adressen des Befehlszählers (1), des Phasenzählers (2) und des Bitzählers (3) ein extern programmierbarer Dekoder zur Erzeugung von Zeitschlitzen für einen DMA-Verkehr im Rahmen eines Systems von mehreren strukturprogrammierbaren Prozessoren angeordnet ist, und daß dem Befehlszähler (1), dem Phasenzähler (2) und dem Bitzähler (3) ein Rücksetzeingang (SYNCI) zur Synchronisation mehrerer in einem solchen System arbeitenden strukturprogrammierbaren Prozessoren zugeordnet ist.

13. Schaltungsanordnung nach Anspruch 8, dadurch gekennzeichnet,
daß zur Synchronisation auf ein Bitmuster die erste Zeitbasis aus einem Befehlszähler (1), einem Phasenzähler (2), einem Bitzähler (3) und einem Befehlsdekoder (4) besteht, derart, daß der getaktete Befehlszähler (1) ausgangsseitig einerseits über den Phasenzähler (2) mit dem nachfolgenden Bitzähler (3) und andererseits über den Befehlsdekoder (4) mit dem Adreßrechner verbunden ist, daß die Ausgänge des Adreßrechners (5) über eine Adreßsteuerung den Adressen eines RAM (12) zugeordnet sind und daß der Befehlsdekoder (4) ausgangsseitig über einen Initiatorausgang (INIT) mit dem Korrelator (6), dem Transversalfilter (7) und einer zweiten Zeitbasis (8) verbunden ist, daß der Befehlsdekoder (4) ausgangsseitig weiterhin über einen Ausgang für das Referenzbitmuster (BITMUSTER) mit dem Korrelator (6), mit einem Steuerausgang (WE) mit der Datensteuerung (10), mit einem Steuerausgang (DMA) mit der DMA-Steuerung (9) und der zweiten Zeitbasis (8) sowie einem Ausgang (COPY) zur Steuerung des Kopierens des Inhalts des Bitzählers (3) und Ausgängen des Adreßrechners (5) verbunden ist.

14. Schaltungsanordnung nach einem der vorherigen Ansprüche 8 bis 13, dadurch gekennzeichnet,
daß zur Adressierung der Datenbits eine aus 3 Teilen bestehende kaskadierte Zähler/Dekoder-Struktur angeordnet ist, derart, daß ein niederwertiger Teil der Adresse des Datenwortes bzw. des ersten Teils desselben in RAM (12) zugeordnet ist, daß der mittlere Teil der Position des Datenbits im Datenwort und der höherwertige Tei der Adresse der, wenn vorhanden, restlichen Teile des Datenwortes im RAM (12) angeordnet ist.

15. Schaltungsanordnung nach einem der vorherigen Ansprüche 8 bis 14, dadurch gekennzeichnet,
daß zum Auslesen der Daten aus einem schreibgeschützten Speicherbereich des RAM (12) zwischen signifikanten Adressen des Bitzählers der zweiten Zeitbasis (8) und der Adreßsteuerung (11) eine getaktete Logik, insbesondere ein Flip-Flop, angeordnet ist, welcher weiterhin eine Steuerleitung (DMA) zum Durchschalten der entsprechenden Adressen zugeordnet ist.

## Claims

1. Process for clocked correlation and signal processing using a structure-programmable processor for wireless receivers in digital frame networks, cellular phone networks and equivalent systems, which are transmitted by transmitters and which function in a time-division mode in order to synchronize the receivers to a bit pattern with variable, time-discrete bit interval in communication channels,
characterized by the following features:

   a) the signal sequence of the transmitter with a known clock but an unknown phase is sampled at a faster clock, preferably integral factor 7-20,
   b) the sampled values are binarized and stored,
   c) the stored values, starting with the current sampled value, are supplied to a correlator, a process in which one sampled value is used per bit of the signal sequence of the transmitter and these sampled values are recorded at a time interval by a bit clock and the results of the correlation are represented with a previously known synchronization value as a string of correlation values, whereby each sampled value is allocated to such a correlation value,
   d) a searched signal sequence is said to have been determined if a minimum number of correlated values occur,
   e) the string of correlation values is delayed with the sampling clock over the length of a bit clock, whereby a correlation pulse is then formed, if the number of delayed correlation values is greater than half of the period of the bit clock or equal to the number of delayed correlation values with a delay that is less than half of the period of the bit clock,
   f) the correlation pulse sets the phase of the bit clock for the subsequently searched data,
   g) the bit string following the synchronous sequence is stored line-by-line in a memory as a matrix and read out again column-by-column (blockwise permutation),
   h) the cycle is repeated with each new sampled value.

2. Process according to Claim 1, characterized in that
the middle of the range of the sampled values represents the middle of the bit with a high degree of correlation and is used for the subsequent samplings as a sampling instant (bit clock), whereby the bit middle clock supplies a second time basis.

3. Process according to Claim 1, characterized in that
the structure-programmable processor according to Claim 1 carries out the following steps in an ordered sequence in the system clock (SCLK):

   a) taking over the status of the bit counter (3) as the base address in the address computer (5) (with the signal COPY), taking over the correlation result of the correlator (6) into a transversal filter (7) and subsequent initialization of the correlator (6) by a first control signal (INIT),
   b) writing (WE) the current sampled value into a RAM (12) at the address specified by phase counter (2) and bit counter (3),
   c) reading the RAM (12) to the address which corresponds to the differential bit interval of the first significant bit to the base address in the bit counter (3) and subsequent output of the first bit of the reference pattern (BITPATTERN) of the instruction decoder (4) as well as release of the correlator (6) with a second control signal (SCTRL),
   d) repetition of the preceding step with the next differential bit interval and the next bit of the reference pattern, whereby the address which corresponds to the differential bit interval was obtained at the address computer (5) by means of addition to the base address.

4. Process according to one of the preceding Claims, characterized in that,
in order to format a matrix from a serial data stream whose bits have to be entered column-by-column into the destination matrix while the second counter is running synchronously with the bit stream in the second time base (8), the word address in the RAM (12) and the bit address of the data bit to be stored in the data word are determined; in that, during the storing of the data, a complete data word or part thereof is loaded from the RAM (12) in a bitwise manipulatable register of the data control (10); in that the bit to be stored is stored in the register with bit clock in accordance with its position; and in that the entire data word or part thereof is then written back into the RAM (12) to the unchanged word address.

5. Process according to one of the preceding Claims, characterized in that the processes of the formatted writing-in of the data and the reading-out of the data (DMA access) take place asynchronously with respect to each other in two different memory areas within the physically idle address space of the RAM (12); in that the memory area is switched over after the end-of-block during the writing-in of the data, whereby the switching over is carried out immediately when no DMA access is made to the other memory area and the switching over is delayed until the completion of the DMA access if such an access takes place at this point in time; in that the DMA access takes place synchronously to an external time basis at a considerably higher data rate than the writing-in.

6.  Process according to one of Claims 1 through 5, characterized in that, for the correlation with two bit patterns, at least two structure-programmable processors function in parallel and the results of the correlation are used for MODE recognition in order to control the second time base (8).

7.  Process according to Claim 1 or 6, characterized in that
    the structure-programmable processor or the structure-programmable processors are RISC or FORTH processors.

8.  Switching arrangement for clocked correlation and signal processing using a structure-programmable processor for wireless receivers in digital frame networks, cellular phone networks and equivalent systems, which are transmitted by transmitters, which function in a time-division mode in order to synchronize the receivers to a bit pattern with variable, time-discrete bit interval in communication channels, characterized in that
    an instruction counter (1) is followed by an instruction decoder (4) and, via phase counter (2), by a bit counter (3), which form a first time base (13); in that a system clock (SCLK) is allocated to the instruction counter (1) on the input side, and a synchronization input (SYNCI) is allocated to the instruction counter (1), to the phase counter (2) and to the bit counter (3) for resetting the first time base (13), whereby the instruction decoder (4) is connected on the output side via a control signal (COPY) with a second time base (8) and, parallel to it, via an address computer (5) with an address control (11), via an initiator output (INIT) with a correlator (6) and a transversal filter (7) as well as a control output (IWE) with a data control (10), an output for bit patterns (BITPATTERN) with the correlator (6) as well as a control line (DMA) with a DMA control (9) and, parallel thereto, with the second time base (8); in that the phase counter (2) is connected via a data bus (PHASE) with the data control (10) and with the bit counter (3), and the bit counter (3) is connected with the address computer (5), in that the data control (10) on the input side, and the transversal filter (7) on the output side are all allocated to the correlator (6), and a data bus (STATUS) for data control (10) and a synchronization control line (SYNCB) to the time base (8) are allocated to the transversal filter (7) on the output side, in that the data control (10) on the output side is connected to a RAM (12) via a bidirectional data bus (DATA) and to the DMA control (9) via another data bus (14), and receives the sampled values via another data bus (15) on the input side, and in that the DMA control (9) is allocated to a DMA bus (16) on the output side, and in that the output (17) of the second time base (8) is connected via the address control (11) to the RAM (12).

9.  Switching arrangement according to Claim 8, characterized in that
    the transversal filter (7) consists of a prefilter and a main filter, and the prefilter is a two-stage shift register with a decoder which delivers a signal at the output when the correlator (6) delivers a signal after two out of three consecutive sampling instants, whereby the main filter is a k-stage shift register with a decoder, whereby k = 50% to 100% of the counting range of the phase counter (2).

10. Switching arrangement according to Claim 8, characterized in that
    the clock frequency of the instruction counter (1) is selected in such a way that it is greater than the Baud rate of the transmitter by the factor of the counting range of the instruction counter (1) and of the phase counter (2).

11. Switching arrangement according to Claim 8, characterized in that
    there are several two-part structure-programmable processors whose number n corresponds to the number of bit patterns used, whereby, in each case, m channels with n bit patterns (m ( n) are allocated to the first part of each structure-programmable processor, consisting of an instruction counter (1), a phase counter (2), a bit counter (3), an instruction decoder (4), an address computer (5), a correlator (6) and a transversal filter (7), and their second part controls the time base (8) via an arrangement consisting of a logic circuit which, in two consecutive correlations, places the bit corresponding to the recognized bit pattern in a mode register, and of a decoder subsequent to the MODE register, which carries out the necessary mode switchovers in the time base (8).

12. Switching arrangement according to Claim 8, characterized in that, at selected addresses of the instruction counter (1), of the phase counter (2) and of the bit counter (3), there is an externally programmable decoder for generating time slots for DMA traffic within the scope of a system of several structure-programmable processors, and in that a reset input (SYNCHI) used for the synchronization of several structure-programmable processors working in such a system is allocated to the instruction counter (1), the phase counter (2) and the bit counter (3).

13. Switching arrangement according to Claim 8, characterized in that, for purposes of synchronization to a bit pattern, the first time base consists of an instruction counter (1), a phase counter (2), a bit counter (3) and an instruction decoder (4), such that the clocked instruction counter (1) is connected on the output side via the phase counter (2) to the subsequent bit counter (3), on the one hand, and via the instruction decoder (4) to the address computer (5), on the other hand, in that the outputs of the address computer (5) are allocated via an address control to the addresses of a RAM (12) and in that the instruction decoder (4) is connected on the output side via an initiator output (INIT) with the correlator (6), the transversal filter (7) and a second time base (8), moreover, in that the instruction decoder (4) is connected on the output side via an output for the reference bit pattern (BITPATTERN) to the correlator (6), to a control output (WE) with the data control (10), to a control output (DMA) with the DMA control (9) and to the second time base (8) as well as to an output (COPY) for controlling the copying of the content of the bit counter (3) and outputs of the address computer (5).

14. Switching arrangement according to one of the preceding Claims 8 through 13, characterized in that, in order to address the data bits, a cascaded counter/decoder structure consisting of three parts is arranged such that a low-order part of the address of the data word or of the first part thereof is allocated to RAM (12), in that the middle part of the position of the data bit is located in the data word and the high-order part of the address of the remaining parts, if present, of the data word is located in the RAM (12).

15. Switching arrangement according to one of the preceding Claims 8 through 14, characterized in that, in order to read out the data from a write-protected memory area of the RAM (12), between significant addresses of the bit counter of the second time base (8) and the address control (11), there is a clocked logic circuit, especially a flip-flop, which is furthermore allocated to a control line (DMA) for switching through the corresponding addresses.

**Revendications**

1. Procédé pour le traitement synchronisé de corrélations et de signaux utilisant un processeur à structure programmable pour récepteurs sans fil dans des réseaux de trames numériques transmises par émetteurs, des réseaux de téléphonie mobile et autres installations de ce type travaillant en multiplexage dans le temps, destiné à la synchronisation des récepteurs sur un profil binaire avec intervalle binaire variable de nature discrète dans le temps dans les canaux de transmission d'informations, possédant les caractéristiques distinctives suivantes:

a) la séquence de signaux de l'émetteur à cadence connue mais à phase inconnue est échantillonnée à une cadence plus élevée, augmentée de préférence d'un facteur à nombres entiers de 7 à 20,
b) les valeurs échantillonnées sont représentées sous forme binaire et mémorisées,
c) les valeurs mémorisées sont transmises à un corrélateur, partant de la valeur échantillonnée en cours, une valeur échantillonée étant utilisée pour chaque bit extrait de la séquence de signaux de l'émetteur, et les valeurs échantillonnées étant enregistrées à un intervalle de temps d'une cadence binaire, et les résultats de la corrélation avec une valeur de synchronisation connue étant représentés sous forme de séquence de valeurs de corrélation, une telle valeur de corrélation étant assignée à chaque valeur échantillonnée,
d) une séquence de signaux recherchée est considérée comme définie lorsqu'il se produit un nombre minimum de valeurs corrélées continues,
e) la séquence des valeurs de corrélation est temporisée avec la cadence d'échantillonnage sur toute la longueur d'une cadence binaire, opération dont résultera une impulsion de corrélation lorsque le nombre des valeurs de corrélation temporisées est supérieur à la demi-période de la cadence binaire, ou bien égal au nombre des valeurs de corrélation temporisées avec une temporisation inférieure à la demi-période de la cadence binaire,
f) l'impulsion de corrélation règle la phase de la cadence binaire pour les données recherchées par la suite,
g) la séquence binaire qui suit la séquence synchrone est mémorisée par lignes sous forme de matrice dans une mémoire, et la lecture se fait par colonnes (permutations par blocs),
h) le cycle se répète pour chaque nouvelle valeur échantillonnée.

2. Procédé selon la revendication 1, caractérisé en ce que le milieu de la plage des valeurs échantillonnées ayant une haute corrélation représente le milieu binaire et sert d'instant significatif d'échantillonnage (cadence binaire) pour les échantillonnages suivants, le milieu de la cadence binaire fournissant une deuxième base de temps.

3. Procédé selon la revendication 1, caractérisé en ce que le processeur à structure programmable selon la revendication 1 exécute les étapes suivantes dans un ordre organisé dans la cadence-système (SCLK):

   a) reprise de la position du compteur de bits (3) comme adresse de base dans le calculateur d'adresses (5) (avec le signal COPY); reprise du résultat de corrélation du corrélateur (6) dans un filtre transversal (7) avec initialisation consécutive du corrélateur (6) par un premier signal de commande (INIT),
   b) écriture (WE) de la valeur échantillonnée en cours dans un mémoire RAM (12) à l'adresse définie par le compteur de phases (2) et par le compteur de bits (3),
   c) lecture de la mémoire RAM (12) à l'adresse qui correspond à l'intervalle binaire différentiel du premier bit significatif par rapport à l'adresse de base dans le compteur de bits (3) et sortie consécutive du premier bit du profil de référence (PROFIL BINAIRE) par le décodeur d'instructions (4), ainsi que validation du corrélateur (6) par un deuxième signal de commande (SCTRL),
   d) répétition du cycle précédent avec l'intervalle binaire différentiel suivant et le bit suivant du profil de référence, l'adresse qui correspond à l'intervalle binaire différentiel ayant été obtenue dans le calculateur d'adresses (5) par addition à l'adresse de base.

4. Procédé selon l'une quelconque des revendications ci-avant, caractérisé en ce que, pour formater une matrice à partir d'un flux de données en série dont les bits doivent être transcrits par colonnes dans la matrice destinataire, c'est avec le deuxième compteur dans la deuxième base de temps (8), lequel fonctionne en mode synchrone au flux binaire, que l'adresse mot est déterminée dans la mémoire RAM (12) et l'adresse binaire du bit d'information à mémoriser est définie dans le mot de données, que lors de la mémorisation, un mot complet ou une partie de celui-ci issu de la mémoire RAM (12) est chargé dans un registre manipulable par bits de la commande de données (10), que le bit à mémoriser est stocké dans le registre suivant sa position et avec la cadence binaire et que, après cela, le mot complet ou la partie de celui-ci est transcrite à nouveau dans la mémoire RAM (12) sur l'adresse mot inchangée.

5. Procédé selon l'une quelconque des revendications ci-avant, caractérisé en ce que les processus d'écriture formatée et de lecture des données (accès DMA) se déroulent en mode asynchrone l'un par rapport à l'autre dans deux zones mémoire différentes à l'intérieur de l'espace d'adresses non occupé physiquement de la RAM (12), que, à la fin d'un bloc pendant l'écriture, la zone mémoire est commutée, cette commutation s'effectuant immédiatement lorsqu'aucun accès DMA à l'autre zone mémoire ne se produit, et étant temporisée jusqu'à ce que l'accès DMA soit accompli au cas où un tel accès se produise à ce moment, et que l'accès DMA se produit en mode synchrone par rapport à une base de temps externe avec un débit beaucoup plus élevé que pour l'écriture.

6. Procédé selon l'une quelconque des revendications 1 à 5, caractérisé en ce que, pour la corrélation sur deux profils binaires, au moins deux processeurs à structure programmable fonctionnent en parallèle, et que les résultats de la corrélation de reconnaissance MODE sont exploités pour la commande de la deuxième base de temps (8).

7. Procédé selon la revendication 1 ou 6, caractérisé en ce que le processeur ou les processeurs à structure programmable sont des processeurs RISC ou FORTH.

8. Appareil pour le traitement synchronisé de corrélation et de signal utilisant un processeur à structure programmable pour récepteurs sans fil dans des réseaux de trames numériques transmises par émetteurs, des réseaux de téléphonie mobile et autres installations de ce type travaillant en multiplexage dans le temps pour la synchronisation des récepteurs sur un profil binaire avec intervalle binaire variable de nature discrète dans le temps dans des canaux de transmission d'informations, caractérisé en ce qu'un décodeur d'instructions (4) et, par l'intermédiaire d'un compteur de phases (2), un compteur de bits (3) sont connectés en aval d'un compteur d'instructions (1 ) et constituent une première base de temps (13), qu'un organe de cadence-système (SCLK) est assigné au compteur d'instructions (1 ) côté entrée et qu'une entrée de synchronisation (SYNC I) est assignée au compteur d'instructions (1), au compteur de phases (2) et au compteur de bits (3) pour la remise à zéro de la première base de temps (13), le décodeur d'instructions (4) étant relié côté sortie à une deuxième base de temps (8) par un signal de commande (COPY), et parallèlement à cela à une commande d'adresses (11) par l'intermédiaire d'un calculateur d'adresses (5), et, par l'intermédiaire d'une sortie d'initiateur (INIT), à un corrélateur (6) et à un filtre transversal (7), ainsi qu'à une sortie de commande (IWE) avec une commande de données (10), à une sortie pour profil binaire (PROFIL BINAIRE) ainsi qu'à une conduite de commande (DMA) avec une commande DMA (9) et parallèlement à cela, à la deuxième base de temps (8), que le compteur de phases (2) est relié par l'intermédiaire d'un bus de données (PHASE) à la commande de données (10) et au compteur de bits (3), et le compteur de bits (3) étant relié au calculateur d'adresses (5), que, au corrélateur (6) est assigné côté entrée la commande de données (10) et côté sortie le filtre transversal (7), et que, au filtre transversal (7) côté sortie est assigné un bus de données (STATUS) vers la commande de données (10) et une conduite de commande de synchronisation (SYNCB) vers la base de temps (8), que la commande de données (10) est reliée côté sortie à une mémoire RAM (12) par un bus de données bidirectionnel (DONNEES) et à la commande DMA (9) par un autre bus de données (14) et reçoit côté entrée les valeurs échantillonnées par l'intermédiaire d'un autre bus de données (15), et que la commande DMA (9) est assignée côté sortie à un bus DMA (16) et que la sortie (17) de la deuxième base de temps (8) est reliée à la mémoire RAM (12) par l'intermédiaire de la commande d'adresses (11).

9. Appareil selon la revendication 8, caractérisé en ce que le filtre transversal (7) comprend un pré-filtre et un filtre principal et que le pré-filtre représente un registre de décalage à deux étages avec décodeur qui fournit à la sortie un signal lorsque à deux de trois instants significatifs d'échantillonnage qui se suivent, le corrélateur (6) fournit un signal, le filtre principal étant un registre de décalage à k étages avec décodeur, k étant égal à 50 ... 100 % de l'étendue de totalisation du compteur de phases (2).

10. Appareil selon la revendication 8, caractérisé en ce que la fréquence de rythme du compteur d'instructions (1) est choisie en sorte qu'elle soit plus élevée que le taux de bauds de l'émetteur, augmentée du facteur de l'étendue de totalisation du compteur d'instructions (1) et du compteur de phases (2).

11. Appareil selon la revendication 8, caractérisé en ce que plusieurs processeurs à structure programmable en deux parties sont prévus dont le nombre n correspond au nombre de profils binaires utilisés, à la première partie de chacun desdits processeurs à structure programmable constituée par le compteur d'instructions (1), le compteur de phases (2), le compteur de bits (3), le décodeur d'instructions (4), le calculateur d'adresses (5), le corrélateur (6) et le filtre transversal (7) étant assigné un nombre de canaux m avec un nombre de profils bit n (m ≤ n) et dont la deuxième partie commande la base de temps (8) par l'intermédiaire d'une configuration constituée par une logique qui, en présence de deux corrélations qui se suivent, met le bit correspondant au profil binaire reconnu dans un registre MODE et par un décodeur disposé en aval du registre MODE et qui procède aux commutations nécessaires des modes dans la base de temps (8).

12. Appareil selon la revendication 8, caractérisé en ce que, à des adresses sélectionnées du compteur d'instructions (1), du compteur de phases (2) et du compteur de bits (3), est rattaché un décodeur programmable externe pour générer des fentes de temps pour un trafic DMA dans le cadre d'un système comprenant plusieurs processeurs à structure programmable, qu'une entrée de remise à zéro (SYNC I) est assignée au compteur d'instructions (1), au compteur de phases (2) et au compteur de bits (3) pour la synchronisation de plusieurs processeurs à structure programmable travaillant dans un tel système.

13. Appareil selon la revendication 8, caractérisé en ce que, pour réaliser la synchronisation sur un profil binaire, la première base de temps est constituée par un compteur d'instructions (1), un compteur de phases (2), un compteur de bits (3) et un décodeur d'instructions (4), et cela de sorte que le compteur d'instructions synchronisé (1) soit relié côté sortie, d'une part avec le compteur de bits (2) par l'intermédiaire du compteur de phases (2) et d'autre par avec le calculateur d'adresses par l'intermédiaire du décodeur d'instructions (4), que les sorties du calculateur d'adresses (5) sont assignées aux adresses d'une mémoire RAM (12) par l'intermédiaire d'une commande d'adresses et que le décodeur d'instructions (4) est relié côté sortie au corrélateur (6), au filtre transversal (7) et à la deuxième base de temps (8) par l'intermédiaire d'une sortie d'initiateur (INIT), que le décodeur d'instructions (4) est encore relié côté sortie, via une sortie pour le profil binaire de référence (PROFIL BINAIRE), à la commande de données (10), via une sortie de commande (WE) à la commande de données (10), via une sortie de commande (DMA) à la commande DMA (9) et à la deuxième base de temps (8), ainsi qu'à une sortie (COPY) pour la commande de la copie du contenu du compteur de bits (3) et aux sorties du calculateur d'adresses (5).

14. Appareil selon l'une quelconque des revendications 8 à 13, caractérisé en ce que, pour l'adressage des bits d'information, une structure cascadée compteur/décodeur consistant en trois parties est disposée de sorte qu'une partie de poids faible de l'adresse du mot ou la première partie de celui-ci est assignée en RAM (12), que la partie du milieu de la position du bit d'information est disposée dans le mot et la partie de plus fort poids de l'adresse dés parties restantes du mot, s'il y en a, dans la RAM (12).

15. Appareil selon l'une quelconque des revendications 8 à 14, caractérisé en ce que, pour la lecture des données à partir d'une zone à écriture protégée de la RAM (12), une logique synchronisée, notamment un flipflop, est disposée entre les adresses significatives du compteur de bits de la deuxième base de temps (8) et la commande d'adresses (11), logique à laquelle est assignée de surcroît une ligne de commande (DMA) pour la transmission des adresses correspondantes.

Fig. 1

Fig. 2

Fig. 3

letztes Bit des
Bitmusters

1. Informationsbit

1 2 3 4 5 6 7

Abtasttakt

Korrelations -
signal

SYNC B

Bittakt

**Fig. 4**

4

Befehlsdekoder

6

Korrelator

Transversalfilter

7

SYNC B

Bitmuster

5

Adreßrechner

Abtastwerte

8   Zeitbasis 2

Adressen

RAM   12

RISC – Prozessor

Fig. 5

bitweise manipulierbares Register

RAM — 1. Datenwort →

1. Datenbit

RAM ← 1. Datenwort ⟨1⟩

RAM — 2. Datenwort →

2. Datenbit

RAM ← 2. Datenwort ⟨2⟩

RAM — 1. Datenwort → ⟨1⟩

⟨1⟩

11. Datenbit

RAM ← 1. Datenwort ⟨1⟩ ⟨11⟩

Fig. 6

EP 0 479 268 B1

Fig. 7

27